# EUROPÄISCHE PATENTSCHRIFT

(11) **EP 2 539 074 B1**
(45) Veröffentlichungstag und Bekanntmachung des Hinweises auf die Patenterteilung: **30.11.2016**
(21) Anmeldenummer: 11704616.9
(22) Anmeldetag: 21.02.2011
(51) Int. Cl.: B01L 3/02, B01J 19/00, G01N 35/10, B01J 4/00

(54) **VERFAHREN UND SYSTEM ZUR ZUDOSIERUNG VON FLUIDEN IN REAKTIONSGEFÄSSE**
METHOD AND SYSTEM FOR THE METERED ADDITION OF FLUIDS INTO REACTION VESSELS
PROCÉDÉ ET SYSTÈME POUR LE DOSAGE DE FLUIDES DANS DES RÉCIPIENTS DE RÉACTION

(30) Priorität: 30.07.2010 CH 12592010; 22.02.2010 CH 217102010
(43) Veröffentlichungstag der Anmeldung: 02.01.2013
(73) Patentinhaber: Reseachem GmbH, 3400 Burgdorf (CH)
(72) Erfinder: BERGER, Stefan, CH-3400 Burgdorf (CH); MÄCHLER, Andreas, CH-3302 Moosseedorf (CH); SCHNETZ, Christine, CH-4500 Solothurn (CH); SCHÄR, Manfred, CH-3400 Burgdorf (CH); BIRCHER, Fritz, CH-4934 Madiswil (CH); HASLEBACHER, Philipp, CH-3457 Wasen (CH)
(74) Vertreter: Rentsch Partner AG
(86) Internationale Anmeldenummer: PCT/EP2011/052545
(87) Internationale Veröffentlichungsnummer: WO 2011/101479

(56) Entgegenhaltungen:
- WO-A1-01/52991
- US-A1- 2003 122 901
- US-A1- 2008 104 885

## Beschreibung

### Technisches Gebiet

Die Erfindung betrifft ein Dosiersystem und Verfahren zur präzisen und sterilen Zudosierung von Flüssigkeiten und Gasen in Reaktionsgefässe.

### Stand der Technik

Aus dem Stand der Technik sind viele Lösungsansätze zur Dosierung von Flüssigkeiten und Gasen bekannt, welche jedoch im speziellen nicht die Bedürfnisse in der Biotechnologie befriedigen. Im Folgenden ist der Stand der Technik an ausgesuchten Beispielen wiedergegeben.

Allgemein bekannt zur präzisen automatisierten Dosierung kleiner Mengen von Flüssigkeiten sind Schlauchquetschpumpen, druckluftbetriebene Dosiersysteme, motorgetriebene Spritzen und Büretten sowie Roboter-Pipettier-Anlagen.

Die DE 10 2006 030 068 A1 offenbart eine Vorrichtung zur Zu- und Abfuhr von Fluiden in geschüttelten Mikroreaktoren-Arrays. Angewendet werden Standard-Mikrotiterplatten, wobei zu den Reaktoren ein oder mehrere Fluidkanäle führen, welche zur Prozesskontrolle individuell gesteuert und geregelt werden können. Die zu- oder abgeführten Flüssigkeitsmengen werden während eines kontinuierlichen Schüttelvorgangs in das Volumen der Reaktionsflüssigkeit ein- oder abgeleitet. Für die Steuerung der Fluide in den Kanälen und für die tropfenweise Zufuhr der Fluide in geschlossene Mikroreaktoren Arrays werden neben Formgedächnislegierungen auch Piezokristalle vorgeschlagen. Nachteilig an diesen vorgeschlagenen Lösungen ist, dass diese Dosiersysteme nicht in einem Autoklaven sterilisierbar sind. Piezokristalle sind aufgrund der mangelnden Temperaturbeständigkeit und der Empfindlichkeit gegenüber feuchtem Milieu nicht autoklavierbar. Ähnliches gilt für formveränderbare Polymere, die leicht verspröden.

In DE 603 02 477 T2 ist ein System zur Präzisionsausgabe von Flüssigkeiten beschrieben. Die Flüssigkeit befindet sich in einem Behälter, der mit einer PIDgeregelten Luftpumpe auf konstant 34.5 kPa Überdruck gepumpt wird. Schnellschalt-Magnetventile werden mit einer Nadelimpuls-Haltespannung für die Dauer der Dosierzeit geöffnet. Der Benutzer legt den Dosiervolumenstrom fest, aus dem das Steuersystem die erforderliche Ventilöffnungszeit mit Hilfe einer hinterlegten Abgleichtabelle bestimmt. Nachteilig an dieser Lösung ist, dass dieses Dosierkonzept für eine Pipettier-Roboter-Anlage konzipiert ist. Pipettier-Roboter sind teure Anlagen, die für ihren Betrieb entsprechend viel Platz sowie eine aufwendige Infrastruktur benötigen. Die Sterilität kann nur in einer voluminösen Laminarflow-Kabine gewährleistet werden, der Betrieb auf einem Schütteltisch ist aus mechanischen Gründen nicht möglich.

Die WO 01/52991 beschreibt ein Verfahren zur Dosierung von Flüssigkeitstropfen auf ein poröses, sprödes Substrat. Mit dem in der WO 01/52991 offenbarten Verfahren ist es möglich, aufgrund einer gemessenen Druckänderung im System, eine ausgegebene Mikrovolumenmengen einer Übertragungsflüssigkeit genau festzustellen. In der WO 01/52991 wird hierzu ein Flüssigkeitsreservoir, gefüllt mit Systemflüssigkeit, welches mit einem Druck beaufschlagt wird, vorgeschlagen. Die Flüssigkeit wird so zum Ventil gefördert. Im Anschluss an das Ventil befindet sich ein Druck- und Durchflusssensor, der den Druck am Ventilaustritt erfasst. Die Veränderungen des Drucks der Systemflüssigkeit werden verwendet, um festzustellen, ob die gewünschte Menge an Übertragungsflüssigkeit ausgegeben wurde. Eine Systemsteuerung steuert elektrisch das Drucksteuersystem, um den Druck der Systemflüssigkeit und dem gemäss den Druck der Übertragungsflüssigkeit einzustellen.

### Aufgabe der Erfindung

Aufgabe der Erfindung ist es, eine Dosiereinheit zur Verfügung zu stellen, welche die erwähnten und andere Nachteile nicht aufweist. Insbesondere soll eine Dosiereinheit eine platzsparende Bauweise aufweisen. Ausserdem soll die Dosiereinheit sterilisierbar sein z.B. in einem Autoklaven und eine hohe Dosiergenauigkeit aufweisen.

Eine weitere Aufgabe ist es, eine Dosiereinheit zur Verfügung zu stellen, mit welcher sehr kleine Tropfenvolumina über längere Zeiträume einzeln dosiert werden können.

Diese Aufgabe wird durch eine Dosiereinheit und ein Dosiersystem sowie durch ein Dosierverfahren gemäss den unabhängigen Ansprüchen gelöst. Weitere vorteilhafte Ausführungsformen ergeben sich aus den abhängigen Ansprüchen.

### Darstellung der Erfindung

Eine Dosiervorrichtung eines erfindungsgemässen Dosiersystems zur Einbringung eines Fluids in ein Reaktionsgefäss umfasst ein Verschlusselement zum Abschliessen des Reaktionsgefässes, mindestens einen Tropfenerzeuger, der im Verschlusselement angeordnet ist, und eine Zuleitung, welche zur Zufuhr des Fluid zum mindestens einem Tropfenerzeuger dient. Der Tropfenerzeuger weist eine Düse zur Abgabe des Fluids in das Reaktionsgefäss und ein Ventil auf, wobei das Ventil im geschlossenen Zustand die Düse von der Zuleitung abtrennt und wobei der Tropfenerzeuger geeignet ist, einzelne Tropfen des Fluids zu erzeugen.

In einer bevorzugten Ausführung ist das Ventil des Tropfenerzeugers elektromagnetisch betätigbar. Geeignet ist beispielsweise ein Ventil, wie es in der WO 2008/083509 beschrieben ist. Die Offenbarung dieses Dokuments bildet einen integralen Bestandteil dieser Beschreibung.

Beim Öffnen des Ventils strömt Fluid in die Düse ein, welches beim Schliessen als einzelner Tropfen mit einem definierten Fluidvolumen mit hoher Geschwindigkeit aus der Düse austritt. Auf diese Weise können sehr kleine Tropfenvolumina hoch präzise in das Reaktionsgefäss dosiert werden. Mit der Dosiervorrichtung eines erfindungsgemässen Dosiersystems ist neben der Dosierung von wässrigen Lösungen auch die Dosierung von Flüssigkeiten wie Säuren, Laugen, Lösungsmitteln und Flüssigkeiten mit erhöhter Viskosität möglich, und auch die Dosierung von Gas. Mit der Dosiervorrichtung des erfindungsgemässen Dosiersystems können Fluide bis zu 150 mPa·s dosiert werden.

In einer bevorzugten Ausführungsform kann eine erfindungsgemässe Dosiersystem Fluid in mehrere Reaktionsgefässe dosieren, beispielweise Nährlösung in die einzelnen Reaktoren einer Multiwell-Bioreaktorplatte. Die Reaktionsgefässe werden durch ein Verschlusselement steril abgeschlossen. In einer bevorzugten Ausführungsform ist pro Reaktionsgefäss ein Verschlusselement vorgesehen und mindestens ein Tropfenerzeuger.

Eine Mehrfach-Dosiervorrichtung des erfindungsgemässen Dosiersystems weist mehrere Dosiervorrichtungen auf, wobei die Dosiervorrichtungen auf einer Rasterplatte angeordnet sind. Diese Rasterplatte entspricht der Anordnung der Bioreaktoren auf der Multiwell-Bioreaktorplatte.

Weiter kann eine Dosiervorrichtung des erfindungsgemässen Dosiersystems über eine Entlüftungsvorrichtung verfügen, welche geeignet ist, einen Überdruck aus dem Reaktionsgefäss abzuleiten.

Ebenfalls vorgesehen sein kann eine Vorrichtung zum Messen des Drucks im Reaktionsgefäss, welche vorzugsweise am Verschlusselement angeordnet ist, und/oder eine Vorrichtung zur Entnahme von Proben aus dem Reaktionsgefäss.

Im Vergleich zu Lösungen aus dem Stand der Technik, ist es mit der Dosiervorrichtung des erfindungsgemässen Dosiersystems möglich, über sehr lange Zeiträume, beispielsweise zwei Wochen, sehr kleine Mengen mit sehr kleiner Frequenz zu dosieren, beispielsweise ein Tropfen à 100 nl pro Tag, ohne dass es zu Einbussen hinsichtlich der Genauigkeit der Dosierung kommt. Durch die Dosiervorrichtung des erfindungsgemässen Dosiersystems wird zudem ein Austrocknen oder ein Verkleben des Tropfenerzeugers verhindert. Ebenfalls möglich sind längere Dosierstopps, beispielsweise über mehrere Wochen.

Vorteilhaft an der Dosiervorrichtung des erfindungsgemässen Dosiersystems ist zudem, dass bei jeder Dosierung Kavitationsblasen erzeugt werden, welche als Sterilbarriere funktionieren.

Die Dosiervorrichtung des erfindungsgemässen Dosiersystems ist so konzipiert, dass sie mehrfach verwendbar ist und mehrfach sterilisierbar ist. Die Materialien, welche für die Dosiervorrichtung des erfindungsgemässen Dosiersystems verwendet werden, sind mehrmals auf 150 °C erhitzbar, beispielsweise geschliffenes Glas für die Ventile, Metalle, keramische Materialien und wärmeresistente Kunststoffe.

In einer anderen vorteilhaften bevorzugten Ausführungsform der Erfindung ist die Dosiervorrichtung für den Einmalgebrauch vorgesehen.

Ein erfindungsgemässes Dosiersystem zum Dosieren von mindestens einem Fluid in ein oder mehrere Reaktionsgefässe umfasst mindestens eine erfindungsgemässe Dosiervorrichtung sowie eine Vorrichtung zur Druckbeaufschlagung eines oder mehrerer Vorratsbehälter für das mindestens eine Fluid, mindestens eine Zuleitung für den Transport des mindestens einen Fluids vom mindestens einen Vorratsbehälter zu mindestens einen Dosiervorrichtung, eine Vorrichtung zum Messen des Drucks im Reaktionsgefäss und eine Steuervorrichtung. Die Steuervorrichtung ist dazu geeignet, die mindestens eine Dosiervorrichtung und die Vorrichtung zur Druckbeaufschlagung zu steuern.

Vorteilhaft an einem erfindungsgemässen Dosiersystem ist, dass pro Reaktionsgefäss mindestens ein Fluid zugeführt werden kann. Je nach Anforderungen können auf diese Weise eine beliebige Anzahl von Fluiden einer beliebigen Anzahl von Reaktionsgefässen zugeführt werden. Durch die Prozessregeleinheit kann die Zufuhr der Fluide selektiv und individuell gesteuert werden. Des Weiteren kann das erfindungsgemässe Dosiersystem für jedes einzelne Fluid kalibriert werden.

Ein erfindungsgemässes Verfahren zur Dosierung eines Fluids mit einer bestimmten Viskosität und Temperatur in ein Reaktionsgefäss umfasst folgende Schritte: Messen eines Drucks p1 im Reaktionsgefäss, Messen eines Drucks p2 in der Zuleitung, Öffnen eines Ventils zwischen der Zuleitung und einer Düse während einer bestimmten Zeitdauer. Beim Öffnen der Düse tritt das Fluid als einzelner Tropfen aus. Die Zeitdauer zwischen dem Öffnen und dem Schliessen des Ventils ist dabei so gewählt, dass in Abhängigkeit der Viskosität und der Temperatur des Fluids sowie der positiven Druckdifferenz (p2 - p1) zwischen dem Druck in der Zuleitung p2 und dem Druck im Reaktionsgefäss p1, ein bestimmtes Tropfenvolumen erhalten wird. Auf diesem Wege werden während eines bestimmten Zeitraums eine bestimmte Anzahl einzelner Tropfen erzeugt und so ein bestimmtes zudosiertes Gesamtvolumen erzielt.

In einer vorteilhaften Variante des Verfahrens werden während eines bestimmten Zeitraums eine bestimmte Anzahl einzelner Tropfen erzeugt, um ein bestimmtes Gesamtvolumen des zudosierten Fluids zu erzielen, bzw. einen bestimmten Volumenstrom.

Zum Beispiel können mit einer Frequenz von 1 s⁻¹ Tropfen à 100 nl zudosiert werden, was einem Volumenstrom von 6 µl/min entspricht bzw. 360 µl/h. Wird alle 10 s dosiert, reduziert sich der Volumenstrom entsprechend, auf 36 µl/h.

Durch das erfindungsgemässe Dosierverfahren wird die erzielte Dosiergenauigkeit im Vergleich zu herkömmlich eingesetzten Dosierverfahren mittels Schlauchquetschpumpe erheblich verbessert. Das erfindungsgemässe Verfahren ist zur Dosierung in Kleinstreaktoren (z.B. Fassungsvolumen 100 µl) sowie in Reaktoren mit einem Fassungsvolumen von beispielsweise 1000 l vorgesehen.

Das erfindungsgemässe Verfahren ist zudem unabhängig von Änderungen des Atmosphärendrucks und kurzfristigen Druckfluktuationen in den Reaktionsgefässen.

Vorteilhaft wird ein erfindungsgemässes Dosierverfahren mit einem erfindungsgemässen Dosiersystem durchgeführt.

Bei einer Ausführungsform des erfindungsgemässen Verfahrens legt beispielsweise ein Kultivierungsprogramm eine bestimmte erste Dosierrate (Soll-Wert) für die Dosierung des Fluids fest. Die bestimmte erste Dosierrate kann beispielsweise als lineare oder exponentielle Feed-Strategie im Kultivierungsprogramm hinterlegt werden. Eine Steuerungsvorrichtung berechnet ausgehend von der im Kultivierungsprogramm für das Fluid festgelegten bestimmten ersten Dosierrate und dem mit einem Drucksensor gemessenen ersten Druck p1 in einem Kopfraum eines Reaktionsgefässes und einem festgelegten erforderlichen Differentialdruck von 0.05 ± 0.001 MPa über der Dosiervorrichtung den Differentialdruck-Stellwert für einen elektropneumatischen Druckregler. Aufgrund der resultierenden Druckdifferenz (p2-p1) zwischen dem Fluiddruck p2 vor der Dosiervorrichtung, welcher vom Messwert eines Drucksensors herleitbar ist, und dem gemessenen Innendruck p1, nach der Dosiervorrichtung im Reaktionsgefäss, wird dann der Stellwert für die Dosiervorrichtung berechnet. In einer ersten Stufe wird der Differentialdruck-Stellwert (p2-p1) in einer Ausgangsstufe in ein elektrisches Sollwertsignal umgewandelt und an einen elektro-pneumatischen Druckregler übermittelt, um so die Druckdifferenz in einem bestimmten engen Band zu halten. In einer zweiten Stufe wird dann in einem Ventiltreiber ein spezielles elektrisches Puls-Frequenz-Signal umgewandelt und an die Dosiervorrichtung geleitet, wo ein Ventil angesteuert wird. Die Pulsbreite bestimmt die Öffnungsdauer des Ventils, und damit in Abhängigkeit von Druckdifferenz (p2-p1), sowie der Viskosität, Dichte und Temperatur des Fluids, das Volumen eines einzelnen Tropfens. Die Frequenz des Steuersignals regelt die Anzahl Tropfen pro Zeiteinheit, und damit die bestimmte erste Dosierrate.

Zur Steigerung der Genauigkeit des erfindungsgemässen Verfahrens erfolgt auch die Ermittlung einer zweiten gemessenen Dosierrate (Ist-Wert) durch Dosierratenbestimmungsmittel, vorzugsweise Wiegemittel oder Durchflusssensoren. Beim Wiegemittel 135 handelt es sich um eine Präzisionswaage, die beispielsweise unter einem oder mehreren Vorratsbehältern positioniert wird, vorzugsweise ist pro Vorratsbehälter ein Wiegemittel vorgesehen. In weiteren Ausführungsformen handelt es sich bei den Wiegemitteln um Hängewaagen oder Waagen mit Unterflur-Wageeinrichtung. Bei diesen Ausführungsformen befindet sich der Vorratsbehälter unter dem Wiegemittel. Er ist beispielsweise unter dem Wiegemittel eingehängt.

Mit Hilfe der Präzisionswaage wird innerhalb eines bestimmten Messintervalls die Gewichtsänderung des Fluids im Vorratsbehälter erfasst und daraus die zweite Dosierrate bestimmt. Dann erfolgt der Vergleich der ersten Dosierrate mit der zweiten Dosierrate. Stimmt die von der Steuerungsvorrichtung berechnete Dosierrate nicht mit der vom Dosierratenbestimmungsmittel gemessenen Dosierrate überein, erfolgt eine Anpassung der Stellwerte durch die Steuerungsvorrichtung, beispielsweise der Frequenz und der Öffnungszeit der Dosiervorrichtung, sodass die zweite gemessene Dosierrate (Ist-Wert) der ersten bestimmten Dosierrate (Soll-Wert) entspricht.

Das Dosiersystem zum Dosieren von mindestens einem Fluid mit einer bestimmten ersten Dosierrate von mindestens einem Vorratsbehälter in ein oder mehrere Reaktionsgefässe umfasst mindestens eine Dosiervorrichtung, ein Mittel zur Bestimmung eines ersten Drucks nach der Dosiervorrichtung und ein Mittel zur Bestimmung eines zweiten Drucks vor der Dosiervorrichtung, eine Vorrichtung zur Druckbeaufschlagung, wobei die Vorrichtung dazu geeignet ist, das Fluid im Vorratsbehälter mit dem zweiten Druck zu beaufschlagen. Weiters umfasst das erfindungsgemässe Dosiersystem eine Steuerungsvorrichtung, wobei die Steuerungsvorrichtung dazu geeignet ist, basierend auf einem Differenzdruck zwischen dem zweiten Druck und dem ersten Druck und der bestimmten ersten Dosierrate mindestens einen Stellwert für die Dosiervorrichtung festzulegen. Weiters umfasst das erfindungsgemässe Dosiersystem ein Dosierratenbestimmungsmittel, wobei die Dosierratenbestimmungsmittel dazu geeignet sind eine zweite Dosierrate zu messen, und die Steuerungsvorrichtung dazu geeignet ist, basierend auf einer Differenz zwischen der ersten von der Steuerungsvorrichtung bestimmten Dosierrate und der zweiten mit dem Dosierratenbestimmungsmittel gemessenen Dosierrate den mindestens einen Stellwert nachzuregeln.

In einer Ausführungsform des erfindungsgemässen Dosiersystems umfassen die Dosierratenbestimmungsmittel Wiegemittel, vorzugsweise eine Präzisionswaage. Das mindestens eine Wiegemittel ist geeignet die zweite gemessene Dosierrate zu messen, indem eine Massendifferenz des Fluids im Vorratsbehälter innerhalb eines bestimmten Messintervalls bestimmt wird.

In einer weiteren Ausführungsform des erfindungsgemässen Dosiersystem ist das Dosierratenbestimmungsmittel ein Durchflusssensor, wobei der Durchflusssensor in einer Transferleitung zwischen dem mindestens einen Vorratsbehälter und der Dosiervorrichtung angeordnet ist und dazu geeignet ist, die zweite gemessene Dosierrate zu ermitteln. Beim Durchflusssensor handelt es sich beispielsweise um einen Single-Use Durchflusssensor.

In einer weiteren Ausführungsform des erfindungsgemässen Dosiersystems umfasst das Mittel zur Bestimmung des zweiten Drucks einen Drucksensor, beispielsweise um einen Single-Use Durchflusssensor.

In einer weiteren Ausführungsform des erfindungsgemässen Dosiersystems ist der Drucksensor in die Dosiervorrichtung integriert.

In einer weiteren Ausführungsform des erfindungsgemässen Dosiersystems umfasst der Drucksensor einen Bypass, wobei der Drucksensor einen ersten Strömungsquerschnitt und der Bypass einen zweiten Strömungsquerschnitt aufweist und der zweite Strömungsquerschnitt des Bypass grösser ist als der ersten Strömungsquerschnitt des Drucksensors.

Beim erfindungsgemässen Verfahren zur Dosierung eines Fluids mit einer bestimmten ersten Dosierrate aus einem Vorratsbehälter in ein Reaktionsgefäss mit einer Dosiervorrichtung, die dazu geeignet ist, einzelne Tropfen des Fluids zu erzeugen, wird ein zweiter Druck vor der Dosiervorrichtung und ein erster Druck nach der Dosiervorrichtung erfasst. Aus der Differenz zwischen dem zweiten Druck und dem ersten Druck wird ein Differenzdruck gebildet. Aus dem Differenzdruck sowie der von der Steuervorrichtung bestimmten ersten Dosierrate wird mindestens ein Stellwert für die Dosiervorrichtung bestimmt, wobei der mindestens eine Stellwert die Öffnungsdauer und/oder die Frequenz der Dosiervorrichtung umfasst. Durch Dosierratenbestimmungsmittel wird eine zweite Dosierrate gemessen, wobei basierend auf einer Differenz zwischen der ersten bestimmten Dosierrate und der zweiten gemessenen Dosierrate der mindestens eine Stellwert nachgeregelt wird.

In einer weiteren erfindungsgemässen Ausführungsvariante umfasst das Verfahren eine Steuerungsvorrichtung, die Öffnungsdauer und/oder die Frequenz der Dosiervorrichtung derart steuert, sodass die zweite gemessene Dosierrate (Ist-Wert) der ersten von der Steuervorrichtung bestimmten Dosierrate (Soll-Wert) entspricht. In einer weiteren Ausführungsvariante wird als Dosierratenbestimmungsmittel mindestens ein Wiegemittel eingesetzt, wobei das mindestens eine Wiegemittel unter oder über einem oder mehreren Vorratsbehältern angeordnet ist. Das Dosierratenbestimmungsmittel bestimmt einen Gewichtswert des Fluids im Vorratsbehälter, wobei die Änderung des Gewichtswerts innerhalb eines bestimmten Messintervalls der zweiten gemessenen Dosierrate entspricht.

In einer weiteren Ausführungsvariante wird als Dosierratenbestimmungsmittel mindestens ein Durchflusssensor eingesetzt, wobei der Durchflusssensor die zweiten gemessenen Dosierrate bestimmt.

In einer bevorzugten Ausführungsvariante des erfindungsgemässen Verfahrens wird ein erfindungsgemässes Dosiersystem eingesetzt.

### Kurze Beschreibung der Zeichnungen

Anhand von Figuren, welche lediglich Ausführungsbeispiele zeigen, wird die Erfindung im Folgenden erläutert.
- Figur 1: zeigt schematisch einen Querschnitt durch eine Dosiervorrichtung des erfindungsgemässen Dosiersystems , montiert auf einem Reaktionsgefäss.
- Figur 2: zeigt eine schematische Schnittdarstellung durch den Tropfenerzeuger einer e Dosiervorrichtung des erfindungsgemässen Dosiersystems, wobei (a) das Ventil geöffnet ist und Fluid durch die Zuleitung strömt, und (b) wobei das Ventil geschlossen ist.
- Figur 3: zeigt einen Querschnitt durch eine mögliche Ausführungsform einer Dosiervorrichtung des erfindungsgemässen Dosiersystems zur Verwendung mit autoklavierbaren Bioreaktoren.
- Figur 4: zeigt einen Querschnitt durch eine weitere mögliche Ausführungsform einer Dosiervorrichtung des erfindungsgemässen Dosiersystems zur Verwendung mit einem kleinen Bioreaktor.
- Figur 5: zeigt eine Aufsicht auf eine 24er-Multiwellplatte.
- Figur 6: zeigt einen Querschnitt durch einen einzelnen Bioreaktor.
- Figur 7: zeigt eine mögliche Ausführungsform eines erfindungsgemässen Dosiersystems.
- Figur 8: zeigt eine weitere Ausführungsform eines erfindungsgemässen Dosiersystems mit einem gemeinsamen Vorratsbehälter und mehreren Dosiervorrichtungen.
- Figur 9: zeigt eine Ausführungsform eines erfindungsgemässen Dosiersystems mit einer Dosiervorrichtung mit mehreren Vorratsbehältern und mit mehreren Tropfenerzeugern.
- Figur 10: zeigt ein erfindungsgemässes Dosiersystem mit einer zusätzlichen Druckkammer zur Verwendung von flexiblen Beuteln als Vorratsbehälter.
- Figur 11: zeigt einen Querschnitt durch eine mögliche Ausführungsform eines Drucktanks eines erfindungsgemässen Dosiersystems.
- Figur 12: zeigt ein erfindungsgemässes Dosiersystem mit einer zusätzlichen Vorrichtung zur Probenentnahme.
- Figur 13: zeigt eine perspektivische Ansicht einer Bioreaktor-Multiwellplatte, auf welche eine Mehrfach-Dosiervorrichtung des erfindungsgemässen Dosiersystem montiert ist.
- Figur 14: zeigt einen Querschnitt durch die Mehrfach-Dosiervorrichtung und die Reaktorplatte aus Figur 13.
- Figur 15: zeigt ein Detail aus Figur 14.
- Figur 16: zeigt eine perspektivische Ansicht einer Bioreaktor-Multiwellplatte, auf welche eine weitere Ausführungsform einer Mehrfach-Dosiervorrichtung des erfindungsgemässen Dosiersystem montiert ist.
- Figur 17: zeigt einen Querschnitt durch die Mehrfach-Dosiervorrichtung und die Reaktorplatte aus Figur 16.
- Figur 18: zeigt ein Detail aus Figur 17.
- Figur 19: zeigt eine Seitenansicht der Montagevorrichtung für die erfindungsgemässe Dosiervorrichtung (nicht dargestellt).
- Figur 20: zeigt eine perspektivische Ansicht der Montagevorrichtung von oben mit der Dosiervorrichtung aufgesetzt auf eine Mehrzahl von Reaktionsgefässen.
- Figur 21: zeigt eine weitere mögliche Ausführungsform des erfindungsgemässen Dosiersystems mit einem Drucksensor und einem Bypass.
- Figur 22: zeigt eine Schnittdarstellung des Drucksensors und des Bypasses angeschlossen am Tropfenerzeuger.
- Figur 23: zeigt eine Schnittdarstellung eines Adapters zur Dosierung von Kleinstmengen
- Figur 24: zeigt eine mögliche Ausführungsform des erfindungsgemässen Dosiersystems mit Durchflusssensor, Drucksensor und Bypass.
- Figur 25: zeigt eine mögliche Ausführungsform des erfindungsgemässen Dosiersystems mit Wiegemittel, Drucksensor und Bypass.
- Figur 26: zeigt eine mögliche Ausführungsform des erfindungsgemässen Dosiersystems mit Wiegemittel, Durchflusssensor, Drucksensor und Bypass.

### Ausführung der Erfindung

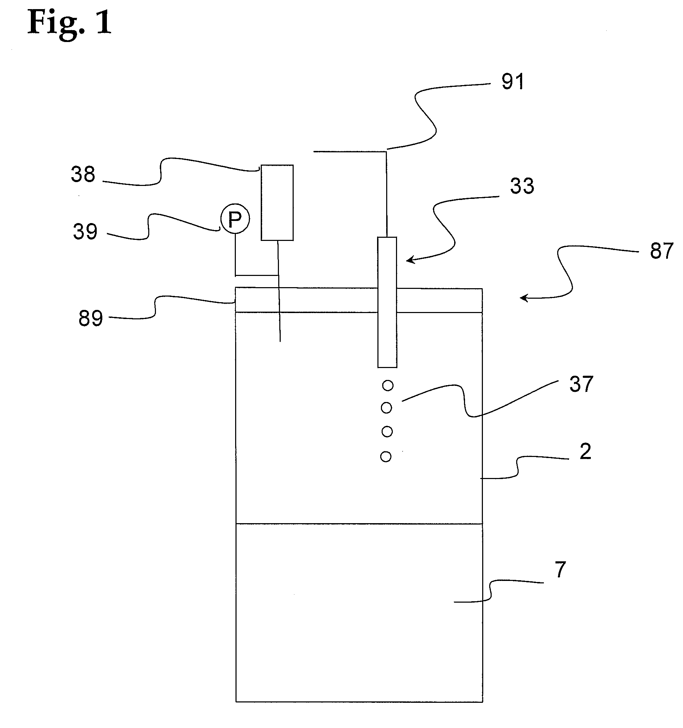

Figur 1 zeigt schematisch den Aufbau einer möglichen Ausführungsform einer Dosiervorrichtung 87 des erfindungsgemässen Dosiersystems. Ein Reaktionsgefäss 2 wird nach oben durch ein Verschlusselement 89 der Dosiervorrichtung 87 dicht abgeschlossen. In einer bevorzugten Ausführungsform ist im Verschlusselement 89 der Tropfenerzeuger 33 angeordnet. Der Tropfenerzeuger 33 wird über die Zuleitung 91 mit Fluid 31 gespeist. Durch Öffnen und Schliessen eines Ventils (nicht dargestellt) wird das Fluid als einzelne Tropfen 37 in das Reaktionsgefäss 2 eingebracht wird. Der Druck im Reaktionsgefäss 2 wird über eine Vorrichtung zum Messen des Drucks 39 erfasst. Überdruck, der im Reaktionsgefäss 2 entsteht, wird über die Entlüftungsvorrichtung 38 abgeleitet.

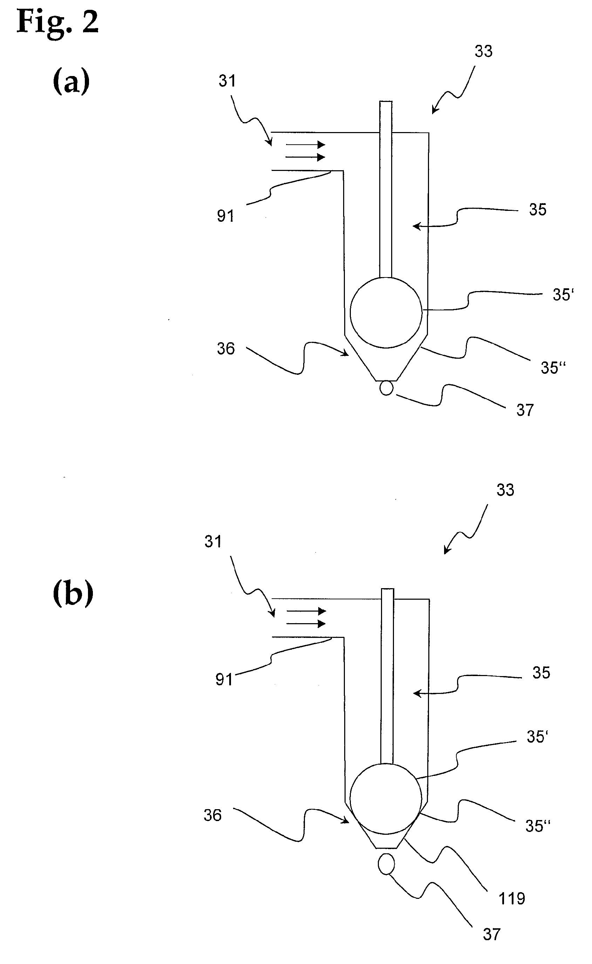

Der Tropfenerzeuger 33 einer Dosiervorrichtung 87 des erfindungsgemässen Dosiersystems umfasst ein Ventil 35, eine Düse 36 und eine Zuleitung 91, über die das Fluid 31 gespeist wird. Figur 2(a) zeigt schematisch den Tropfenerzeuger 33 einer Dosiervorrichtung, mit geöffneten Ventil 35. Im gezeigten vorteilhaften Beispiel umfasst das Ventil 35 eine Ventilkugel 35' und einen Ventilsitz 35". Im geöffneten Zustand des Ventils 35 umströmt das Fluid 31 die Ventilkugel und tritt in die Düse 36 ein. In dieser wird das Fluid beschleunigt.

Wird nun das Ventil 35 geschlossen, wie in Figur 2(b) dargestellt, drückt die Ventilkugel gegen die Innenwand 119 beziehungsweise Ventilsitz 35". Die Düse 36 ist von der Zuleitung 91 abgetrennt und es kann kein weiteres Fluid 31 nachströmen. Das bereits in der Düse 36 befindliche Fluidvolumen verlässt die Düse, und bildet einen Tropfen 37, welcher mit hoher Geschwindigkeit, zum Beispiel zwischen 2 und 10 m/s, vom Tropfenerzeuger 33 Richtung Innenraum des Reaktionsgefässes 2 wegfliegt. Eine Einzeldosis des Fluids wurde nun also in das Reaktionsgefäss 2 zudosiert. Dieser Vorgang kann nach Bedarf wiederholt werden.

In einer bevorzugten Ausführungsform der Erfindung wird das Ventil 35 elektromagnetisch betätigt, wodurch das Ventil flexibel mit einem gepulsten Signal angesteuert werden kann, um eine Tropfensequenz mit der gewünschten Frequenz und den gewünschten Tropfenvolumina zu erreichen.

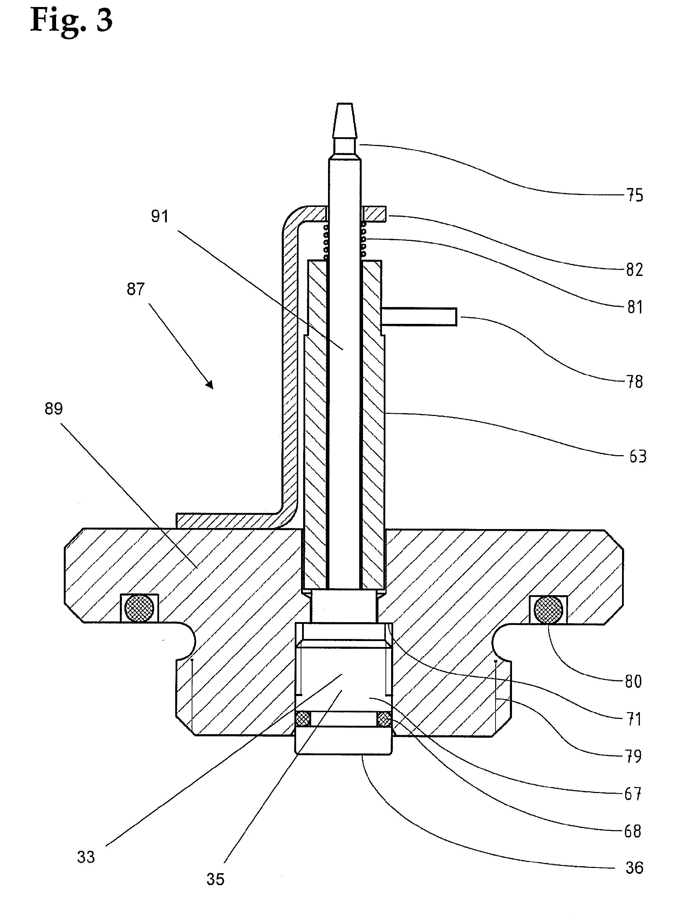

Figur 3 zeigt einen Querschnitt durch eine mögliche Ausführungsform einer Dosiervorrichtung 87 des erfindungsgemässen Dosiersystems, welche speziell geeignet ist zur Verwendung mit autoklavierbaren Bioreaktoren. Die Dosiervorrichtung wird mit einem Aussengewinde 79 des Abschlusselements 89 in eine freie Portbohrung der Portplatte eines Bioreaktors (nicht dargestellt) eingeschraubt. Ein O-Ring 80 stellt eine druckfeste, sterile Abdichtung zwischen Portplatte und Abschlusselement sicher. In der Mitte des Abschlusselements 89 ist der Tropfenerzeuger mit Ventil 35 und Düse 36 angeordnet. Ein Gewindering 67 ist steril auf den Grundkörper des Ventils 35 aufgeklebt. Der verwendete Klebstoff ist FDA konform und autoklavierbar. Das Ventil 35 wird dann bis zum Anschlag in das Abschlusselement 89 eingeschraubt. Ein O-Ring dichtet die Verbindung zwischen Ventil und Einsatz steril ab. Von oben her sichert ein Niederhalter 82 mit Federelement 81 die Spule 63 spielfrei. Die Spule ist drehbar eingespannt, damit die Anschlussdrähte der Spule nach Bedarf ausgerichtet werden können Ein Schlauchanschluss 75 erlaubt die Kopplung der Zuleitung 91 an eine Transferleitung 32.

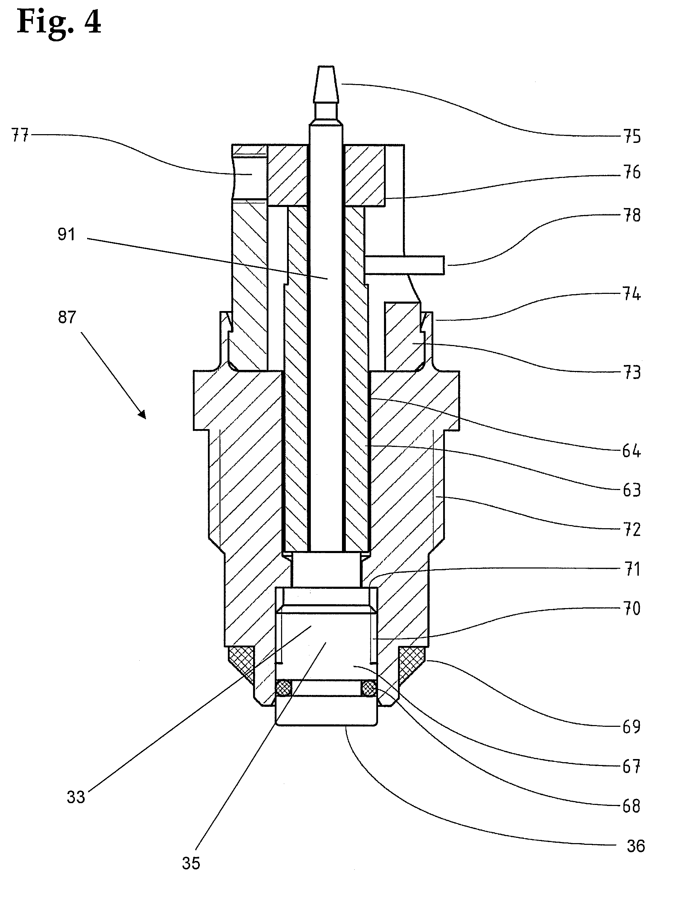

Eine alternative Ausführungsform einer Dosiervorrichtung 87 des erfindungsgemässen Dosiersystems ist in Figur 4 dargestellt. Diese Variante ist besonders geeignet für einzelne kleine Bioreaktoren. Die Dosiervorrichtung 87 wird mit dem Gewinde 72 in eine freie Portbohrung der Portplatte des Bioreaktors (nicht dargestellt) eingeschraubt. Ein Dichtring 69 dichtet die Verbindung zwischen Dosiervorrichtung 87 und Portplatte steril ab. In der Mitte des Abschlusselements ist der Tropfenerzeuger 33 mit Ventil 35 und Düse 36 angeordnet. Ein Gewindering 67 ist steril auf den Grundkörper des Ventils 35 aufgeklebt. Der verwendete Klebstoff ist FDA konform und autoklavierbar. Das Ventil 35 wird dann bis zum Anschlag 71 in das Abschlusselement 89 eingeschraubt, und ein O-Ring 68 dichtet die Verbindung zwischen Ventil und Einsatz steril ab. Auf diese Einheit wird der Spulenkörper 63 auf die Zuleitung 91 des Tropfenerzeugers aufgeschoben, und durch ein Einschnappteil 73, 76 formschlüssig gehalten. Der Schnappverbinder ist vorteilhaft so gestaltet ist, dass Spule 63 und Spulenhalter 73 drehbar sind, damit die Anschlussdrähte 78 der Spule nach Bedarf ausgerichtet werden können. Ein Anschluss 75 der Zuleitung 91 dient der Verbindung mit einer Transferleitung 32.

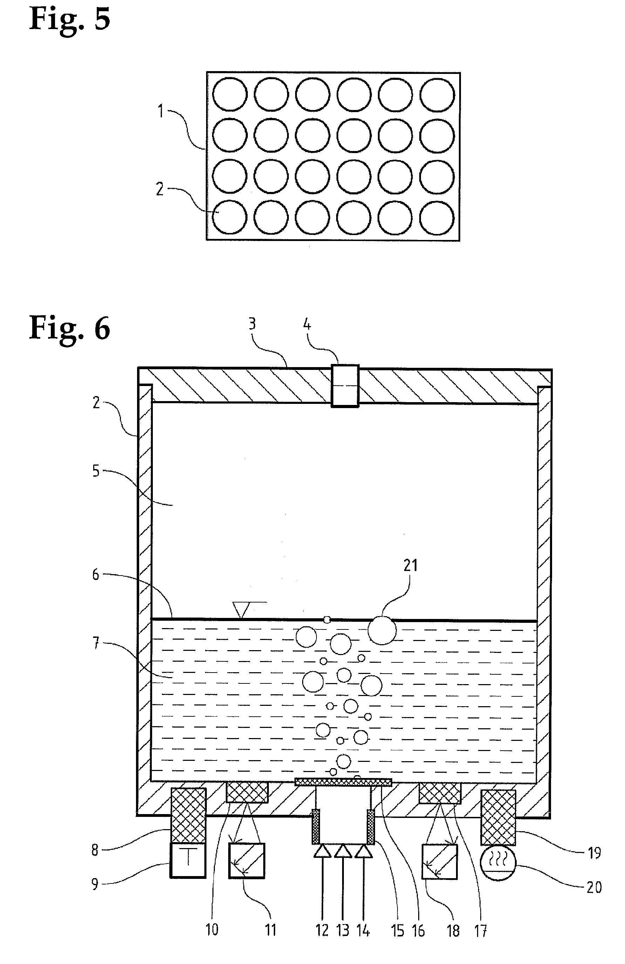

Eine Dosiervorrichtung des erfindungsgemässen Dosiersystems kann für verschiedene Reaktionsgefässe verwendet werden, beispielsweise für Multiwell-Platten, wie sie für chemische, biochemische und mikrobiologische Untersuchungen verwendet werden. Figur 5 zeigt beispielhaft eine Aufsicht auf eine handelsübliche, dem SBS Standard entsprechende Multiwell-Bioreaktorplatte 1 mit dem Format 128×86 mm, auf welcher insgesamt 24 Reaktionsgefässe 2, welche im vorliegenden Fall Bioreaktoren genannt werden, mit 5 bis 50 ml Reaktorvolumen und entsprechend empfohlenem Kulturvolumen aufgebaut sind. Mit einer solchen Multiwell-Bioreaktorplatte 1 können bis zu 24 mikrobiologische Prozesse parallel gefahren werden.

Figur 6 zeigt einen Querschnitt durch ein einzelnes Reaktionsgefäss am Beispiel eines einzelnen Bioreaktor 2. Der Bioreaktor ist mit einer Sterildichtung 3 nach aussen hin steril abgeschlossen. Im Bioreaktor 2 ist Kulturmedium 7 bis zum Flüssigkeitsniveau 6 eingefüllt. Der Kopfraum 5 des Innenraums über der Kulturmedium 7 wird über einen Sterilfilter 4 gegen den Atmosphärendruck hin entlüftet.

Im gezeigten Beispiel wird die Reaktortemperatur wird mit einem Temperatursensor 9 gemessen, welcher mittels eines Wärmeleiters 8 an den Reaktorboden angekoppelt ist. Die Reaktortemperatur kann mit einer Heizung 20 erhöht werden, welche mittels eines Wärmeleiters 19 an den Reaktorboden angekoppelt ist.

Dem Reaktionsgefäss 2 können CO₂-Gas 12 zur Senkung des pH-Werts, O₂-Gas oder Luft 13 zur Erhöhung des DO-Werts und NH₃-Gas 14 zur Erhöhung des pH-Werts zugeführt werden. Die Gase werden über ein Dichtelement 15 und eine sterile semipermeable Membrane 16 in das Kulturmedium 7 eingebracht und steigen als Gasblasen 21 in den Kopfraum 5 des Bioreaktors auf. Im Reaktionsgefäss 2 ist zur Messung des pHs ein pH-Sensor angeordnet, in Form eines pH-empfindlichen Materials 10 und einem darauf gerichteten optischen Sensor 11, welcher den notwendigen Messwert zur Bestimmung des pH-Werts im Kulturmedium 7 liefert. Zur Messung des Sauerstoffgehalts im Reaktionsgefäss 2 ist ein Sauerstoffempfindliches Material 17 eingelassen, auf welches wiederum ein optischer Sensor 18 gerichtet ist, der den notwendigen Messwert zur Bestimmung des DO (dissolved oxygen)-Werts im Kulturmedium 7 ermittelt.

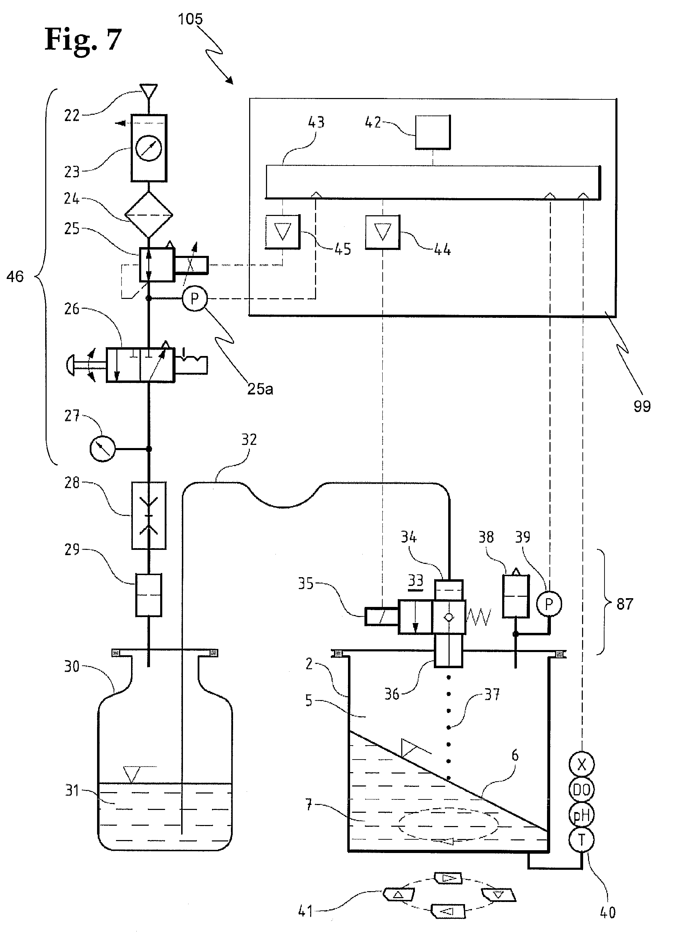

Eine Dosiervorrichtung 87 des erfindungsgemässen Dosiersystems als Teil eines erfindungsgemässen Dosiersystems 105 ist in Figur 7 schematisch dargestellt. Auf einem Reaktionsgefäss 2 ist eine Dosiervorrichtung 87 des erfindungsgemässen Dosiersystems angeordnet. Ein Verschlusselement 89 der Dosiervorrichtung 87 schliesst das Reaktionsgefäss gegenüber der Umgebung dicht ab. Der Bioreaktor 2 wird mit einem Orbitalschüttler 41 (nur symbolhaft dargestellt) mit einem Orbitaldurchmesser von beispielsweise 5 mm und einer Frequenz von 0 bis 1000 min⁻¹ geschüttelt um eine gute Durchmischung des Kulturmediums 7 sicherzustellen, und gleichzeitig eine schnelle Untermischung des eingebrachten Fluids 31 zu erreichen. Ein solches beizumischendes Fluid 31 kann zum Beispiel ein Feed-Fluid für die Mikroorganismen im Kulturmedium 7 des Bioreaktors sein. Im Bioreaktor 2 kann durch die biotechnologischen Prozesse ein Überdruck entstehen, welcher über einen Sterilfilter-Entlüfter 38 an die Atmosphäre abgegeben wird. Im gezeigten Beispiel ist der Sterilfilter-Entlüfter 38 am Verschlusselement 89 angebracht.

Die Dosiervorrichtung 87 weist einen Tropfenerzeuger 33 auf, mit einer Zuleitung 91 für das Fluid 31, einem Ventil 35 und einer nachgeschalteten Düse 36. In der Zuleitung kann wie im gezeigten Beispiel ein Partikelfilter 34 angeordnet sein, beispielsweise mit einer Siebgrösse von 17 µm. Das Fluid wird über eine geeignete Transferleitung 32 von einem Vorratsbehälter 30 zur Zuleitung des Tropfenerzeugers 33 gefördert, mittels eines Überdrucks im Vorratsbehälter 30. Das Fluid 31 in der Zuleitung steht gegenüber dem Reaktionsgefäss unter Überdruck. Die Düse 36 kann beispielsweise einen Durchmesser von 0.15 mm aufweisen.

Der Tropfenerzeuger 33 dosiert das Fluid 31 zu einzelnen Tropfen 37, mit einem definierten Volumen von 100 nl bis 100 µl. Durch schnelles Öffnen und Schliessen des elektromagnetisch betätigbaren Ventils 35 gelangt eine definierte Menge des Fluids 31 in die Düse und verlässt diese als einzelner Tropfen 37. Aufgrund der hohen Beschleunigung des Fluids in der Düse hat der Tropfen 37 im Freiflug eine Geschwindigkeit von 2 bis 10 m/s. Diese Geschwindigkeit ist wesentlich höher als die Orbitalgeschwindigkeit, so dass das geschüttelte flüssige Kulturmedium 7 während der Flugphase als statisch aufgefasst werden kann. Der Tropfen 37 durchquert den Kopfraum 5 und trifft auf die Oberfläche 6 des Kulturmedium 7 auf. Dort vermischt es sich anschliessend mit dem Kulturmedium 7. Durch wiederholtes Öffnen des Ventils 35 kann der Tropfenerzeuger 33 eine genau bestimmte Anzahl Tropfen 37 erzeugen, und so ein grösseres Dosiervolumen erreichen und/oder die Dosiergeschwindigkeit steuern.

Wenn der Druck p1 im Reaktor 2 gegenüber dem Aussendruck einen bestimmten Wert überschreitet, wird dieser Überdruck über die Entlüftungsvorrichtung 38 abgeführt. Der durchschnittliche Druck im Reaktionsgefäss 2 ist somit im Wesentlichen konstant. Um die Genauigkeit der einzelnen Tropfenvolumen und damit die Dosiergenauigkeit zu verbessern, wird der Druck p1 im Kopfraum 5 der Reaktionsgefässes 2 mit einem Drucksensor 39 gemessen und an den Prozessregler 43 einer Steuerungsvorrichtung 99 eines erfindungsgemässen Dosiersystems 105 übermittelt. Das Dosiersystem 105 weist zudem eine Vorrichtung 46 zur Druckbeaufschlagung der Vorratsbehälters 30 auf. Diese Vorrichtung 46, welche durch die Prozessregeleinheit 43 gesteuert wird, erlaubt es, den Druck p2 im Inneren des Vorratsbehälters 30 in einer bestimmten Bandbreite zu regeln.

In der dargestellten Variante weist die Vorrichtung 46 eine Druckluftquelle 22 mit trockener, ölfreier Druckluft und mit einem Systemdruck von 0.2 ... 0.7 MPa auf. Die Druckluftquelle 22 ist an eine Wartungseinheit 23 angeschlossen, welche die Druckluft filtert und den Druck auf 0.2 MPa reduziert. Ein nachgeschalteter Mikrofilter 24, beispielsweise mit einer Siebgrösse von 0.3 µm, entfernt Partikel aus der Druckluft. Ein elektropneumatischer Druckregler 25, welcher durch die Prozessregeleinheit 43 ansteuerbar ist, reduziert den Luftdruck weiter und regelt den Druck auf den gewünschten Wert im Bereich von 0.005 bis 0.1 MPa auf ±0.001 MPa genau. Der resultierende Druck wird mit einem Drucksensor 25a gemessen und an die Prozessregeleinheit 43 übermittelt. Mit einem 3/2-Wege-Absperrventil 26 wird die Druckluft nach Bedarf in das nachgeschaltete System zugeschaltet oder dieses drucklos geschaltet. Ein Manometer 27 zeigt einem Benutzer zur visuellen Kontrolle den Druck im System an. Eine Schnellkupplung 28 bildet die Schnittstelle von der Druckversorgungseinheit 46 zum nachgeschalteten System. Die Druckluft wird über ein Sterilfilter 29 in den Vorratsbehälter 30 eingebracht. Der resultierende Druck p2 im Vorratsbehälter treibt das Feed-Fluid 31 über eine geeignete Transferleitung 32, beispielsweise einem sterilen Schlauch 32, zur Zuleitung des Tropfenerzeugers 33 der Dosiervorrichtung 87 des erfindungsgemässen Dosiersystems.

Ein Kultivierungsprogramm 42 legt unter anderem die Sollwerte für die Dosierung des Fluids 31 fest. Die Sollwerte können beispielsweise als lineare oder exponentielle Feed-Strategien im Kultivierungsprogramm 42 hinterlegt werden. Der Prozessregler 43 berechnet ausgehend von dem im Kultivierungsprogramm 42 für das Fluid 31 festgelegten Volumenstrom-Sollwert und dem mit dem Drucksensor 39 gemessenen Druck p1 im Kopfraum 5 und einem festgelegten erforderlichen Differentialdruck von 0.05 ± 0.001 MPa über dem Tropfenerzeuger 33 den Differentialdruck-Stellwert für den elektropneumatischen Druckregler 25. Aufgrund der resultierenden Druckdifferenz (p2-p1) zwischen dem Fluiddruck p2 vor dem Ventil 35, welcher vom Messwert des Drucksensors 25a herleitbar ist, und dem gemessenen Innendruck p1 im Reaktor 2 wird dann der Stellwert für den Tropfenerzeuger 33 berechnet. In einer ersten Stufe wird der Differentialdruck-Stellwert (p2-p1) in der Ausgangsstufe 45 in ein elektrisches Sollwertsignal umgewandelt und an den elektro-pneumatischen Druckregler 25 übermittelt, um so die Druckdifferenz in einem bestimmten engen Band zu halten. In einer zweiten Stufe wird dann im Ventiltreiber 44 ein spezielles elektrisches Puls-Frequenz-Signal umgewandelt und an den Tropfenerzeuger 33 geleitet, wo es das Ventil 35 ansteuert. Die Pulsbreite bestimmt die Öffnungsdauer des Ventils 35, und damit in Abhängigkeit von Druckdifferenz (p2-p1), sowie der Viskosität, Dichte und Temperatur des Fluids das Volumen eines einzelnen Tropfens 37. Die Frequenz die Steuersignals regelt die Anzahl Tropfen pro Zeiteinheit, und damit die Dosiergeschwindigkeit. Durch Berücksichtung der rheologischen Eigenschaften des Fluids kann die Dosiergenauigkeit über einen breiten Temperaturbereich von 15 bis 50 °C unabhängig gemacht werden.
Beispiel 1: Der erforderliche Differentialdruck beträgt 0.05 MPa. Der mit dem Drucksensor 39 gemessene Überdruck im Kopfraum 5 beträgt 0.02 MPa. Der Differentialdruck-Stellwert für den elektropneumatischen Druckregler 25 beträgt 0.07 MPa ist gleich dem Differentialdruck von 0.05 MPa plus dem Überdruck (Innendruck p1 abzüglich Atmosphärendruck) im Kopfraum 5 von 0.02 MPa. Statische Druckabfälle beispielsweise über den Sterilfilter 29 werden hier vorzugsweise mitberücksichtigt.
Beispiel 2: Der Volumenstrom für das Feed-Fluid 31 soll 1 ml/h betragen. Die Dosiereinheit 33 erzeugt bei einer Pulsbreite von 10'000 µs Dauer einen Tropfen 37 mit einem Volumen von 1000 nl. Der Ventiltreiber 44 muss demzufolge alle 3.6 s einen Puls erzeugen.

Vorzugsweise kann die Prozessregeleinheit 43 weitere relevante Messwerte X im Bioreaktor verwerten, wie zum Beispiel Temperatur T, pH, DO, und diese ebenfalls in einem Kultivierungsprogramm 42 berücksichtigen.

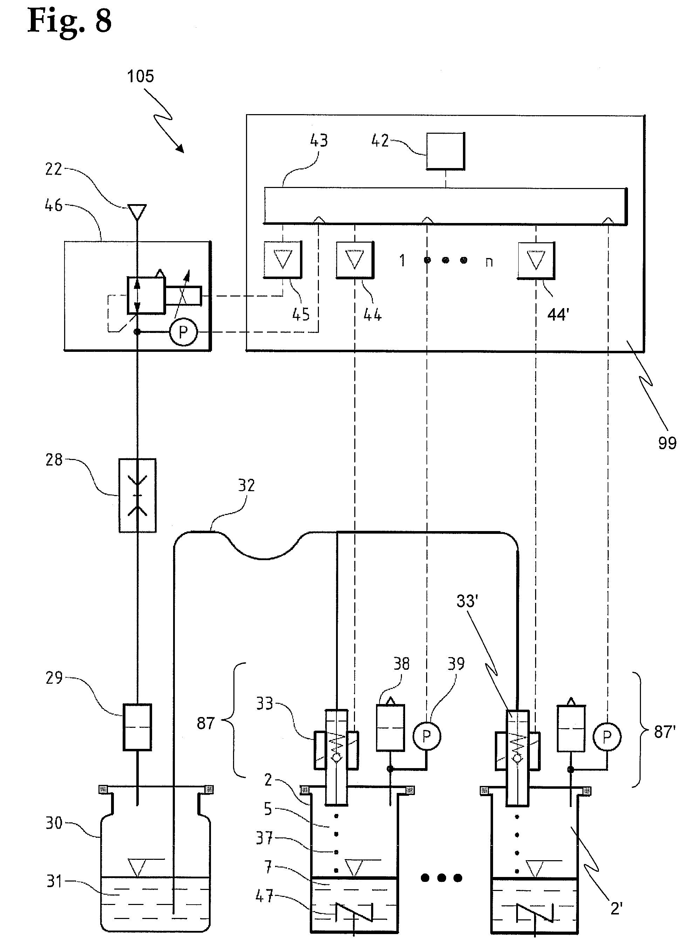

Figur 8 zeigt eine Ausführungsvariante eines erfindungsgemässen Dosiersystems 105, bei welchem Fluid 31 aus einem gemeinsamen Vorratsbehälter 30 über eine gemeinsame Transferleitung 32 in mehrere Dosiervorrichtungen 87, 87', welche jeweils auf einem Bioreaktor 2, 2' angebracht sind. Zur vereinfachten Darstellung ist der Partikelfilter 34, das Ventil 35 und die Düse 36 als Tropfenerzeuger 33 zusammengefasst dargestellt. Im dargestellten Beispiel weisen die Bioreaktoren 2, 2' unten angebrachte Rührer 47 auf, um eine gute Durchmischung von Kulturmedium 7 und zudosiertem Fluid 31 zu erreichen.

Ein Überdruck im Bioreaktor 2, 2' kann wiederum über einen Sterilfilter-Entlüfter 38 an die Atmosphäre abgegeben werden. Der Druck p1, p1' in jedem Reaktionsgefäss 2, 2' wird mit einem zugeordneten Drucksensor 39 gemessen und der ermittelte Wert an den Prozessregler 43 übermittelt. Ein Kultivierungsprogramm 42 legt die Sollwerte für die Dosierungen des Feed-Fluid 31 in die verschiedenen Bioreaktoren 2 fest.

Da der Druck p2 im gemeinsamen Vorratsgefäss 30 für alle Dosiervorrichtungen 87, 87' identisch ist, werden unterschiedliche Dosiervolumina für die verschiedenen Reaktoren 2, 2' über die Pulsbreite und/oder die Pulsfrequenz des Steuersignals des jeweiligen Ventils geregelt.

Der Prozessregler 43 kann das Kultivierungsprogramm 42 für alle Reaktoren parallel abarbeiten. Für eher langsame biotechnologische Vorgänge ist es jedoch vorteilhaft, in einem Multiplex-Verfahren die Reaktoren hintereinander während eines wählbaren Zeitabschnitts im Bereich von beispielsweise 0.1 bis 10 s abzuarbeiten. Der Prozessregler 43 regelt in jedem Zeitabschnitt den Differentialdruck von 0.05±0.001 MPa für die jeweilige Dosiervorrichtung 87, 87' individuell neu, unter Berücksichtigung des im jeweiligen Kopfraum 5 der 1 bis n Bioreaktoren 2 mit dem Drucksensor 39 gemessenen Überdruckes. Der Differentialdruck-Stellwert wird in der Ausgangsstufe 45 in ein elektrisches Sollwertsignal umgewandelt und an den elektropneumatischen Druckregler 25 übermittelt. Der Prozessregler 43 bestimmt dann für den jeweiligen Tropfenerzeuger 33, 33' des Bioreaktors die anwendbare Pulsbreite und Frequenz. Mit den resultierenden individuellen Steuersignalen werden dann mittels der Ventiltreiber 44, 44' der Steuerungsvorrichtung 99 die Tropfenerzeuger 33, 33' gesteuert.

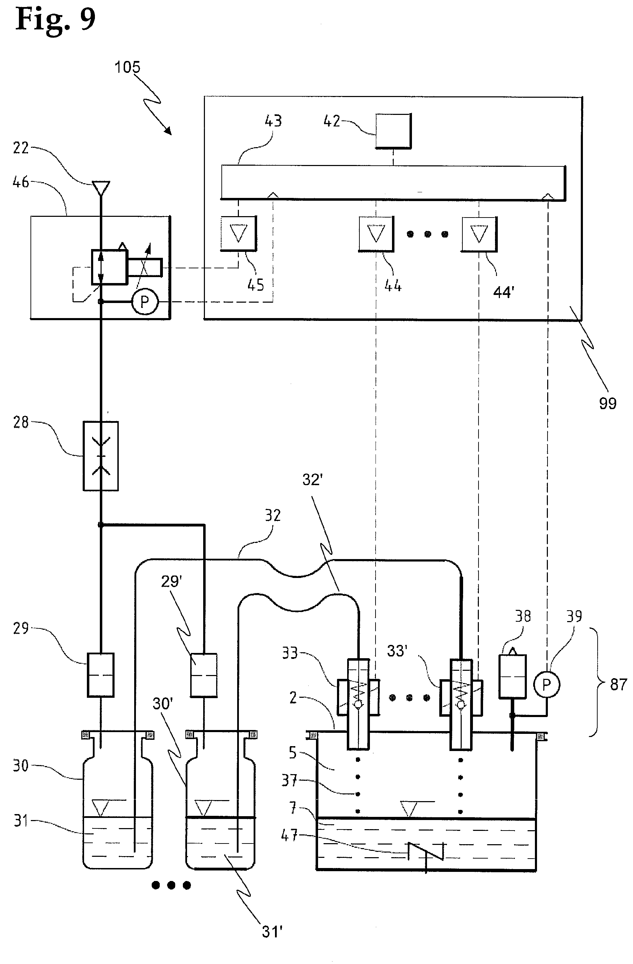

Figur 9 zeigt eine weitere vorteilhafte Ausführungsform eines erfindungsgemässen Dosiersystems 105, mit einer auf einem einzelnen Bioreaktor 2 angebrachten Dosiervorrichtung 87 mit mehreren einzelnen Tropfenerzeugern 33, 33', welche je ein Fluid 31, 31' aus einem Vorratsbehälter 30, 30' beziehen. Die einzelnen Tropfenerzeuger 33, 33' sind von der Prozessregeleinheit 43 separat ansteuerbar.

Die einzelnen Vorratsbehälter 30, 30' sind über ein jeweiliges Sterilfilter 29, 29' mit einer gemeinsamen Druckregelvorrichtung 46 verbunden. Der wirkende Druck treibt das jeweilige Fluid 31, 31' über separate Transferleitungen 32, 32' zu den Tropfenerzeugern 33, 33' der Dosiervorrichtung 87. Der Druck im Bioreaktor 2 wird mit einem Drucksensor 39 gemessen und der ermittelte Wert an den Prozessregler 43 übermittelt. Ein Kultivierungsprogramm 42 steuert individuell die Dosierung der einzelnen Fluide 31, 31' in den Reaktor 2, durch Ansteuern der Ventile der einzelnen Tropfenerzeuger 33, 33' mit individuellen Puls-Frequenz-Steuersignalen.

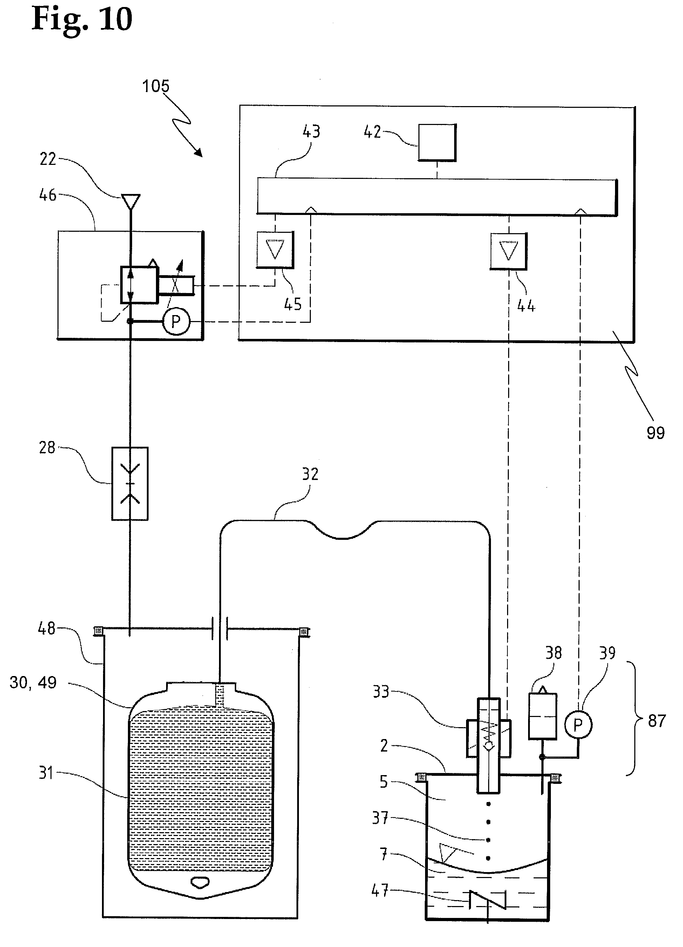

Figur 10 offenbart noch eine Variante einer Dosiervorrichtung des erfindungsgemässen Dosiersystems, in welcher ein Sterilbeutel 49 als Vorratsbehälter für das Fluid 31 verwendet werden kann. Die Steuerungseinheit 99 und die Dosiervorrichtung 87 und die Druckversorgungseinheit 46 (vereinfacht dargestellt) entsprechen der Ausführunsgform in Figur 7. Zusätzlich umfasst dass gezeigte Dosiersystem eine Druckkammer 48 auf, welche mit der Druckversorgungseinheit 46 verbunden ist.

In der Druckkammer 48 ist ein flexibler Beutel 49 angeordnet, in dem das Feed-Fluid 31 vorgängig steril eingebracht wurde. Der Druck in der Druckkammer wirkt über die flexible Beutelwand direkt auf das Fluid 31, und fördert das Fluid 31 über die Transferleitung 32 zum Tropfenerzeuger 33 der Dosiervorrichtung 87.

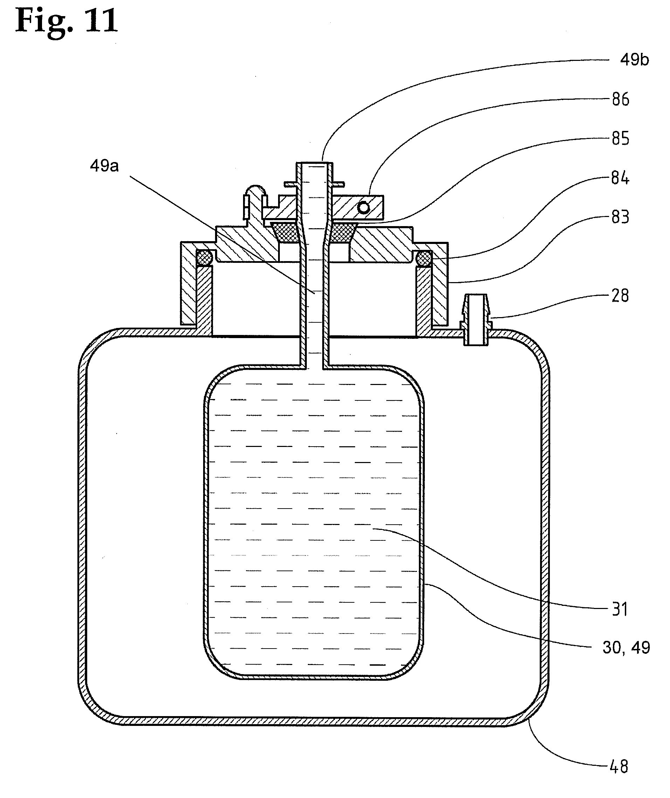

Figur 11 zeigt im Querschnitt einer möglichen Ausführungsform einer Druckkammer 48 eines erfindungsgemässen Dosiersystems 105, in welchem ein flexibler Beutel 49 als Vorratsbehälter 30 angeordnet ist. Das Fluid 31 ist steril im Beutel 49 abgefüllt. Die Druckkammer 48 ist über eine Kupplung 28 an die Druckversorgungseinheit 46 des Dosiersystems 105 angeschlossen. Der Druck im Innenraum der Druckkammer 48 wirkt auf den Beutel 49 und fördert das Fluid 31 über eine Transferleitung zur Dosiervorrichtung. Der Druckbehälter 48 wird über eine Dichtung 84 abgedichtet, welcher sich zwischen einer Überwurfmutter 83 und dem Druckkammerflansch befindet. Der Beutel 49 wird mit einer geteilten, doppelkonischen Dichtung 85 in der Druckkammer dichtend gehalten. Die genannte doppelkonische Dichtung wird mit einem Spannring 86 auf die Entnahmeleitung 49a des Beutels 49 gepresst. Über eine Sterilkupplung 49b wird die Entnahmeleitung an eine Fluid-Transferleitung 32 angekoppelt.

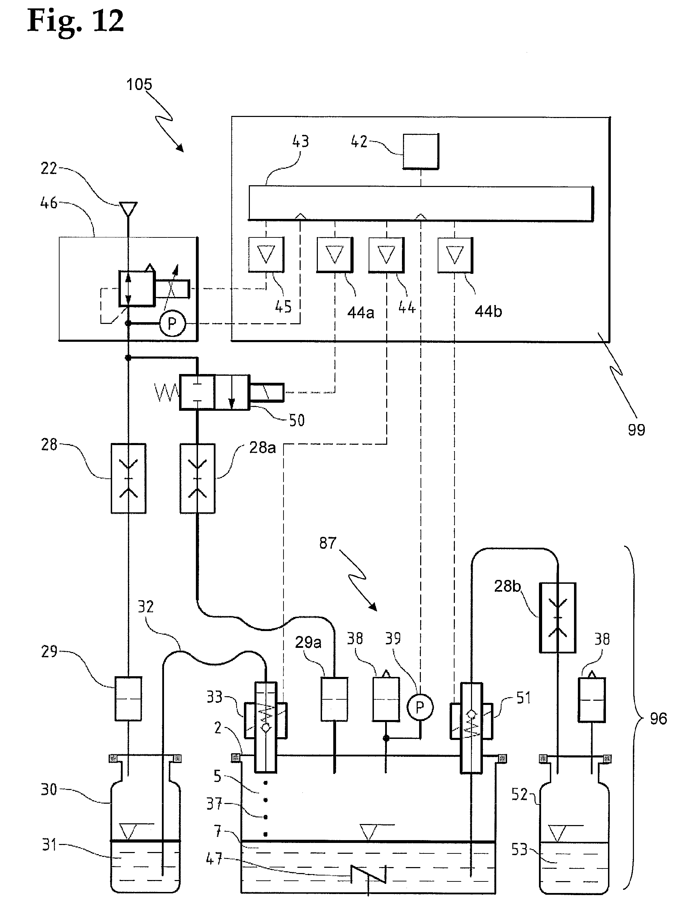

Eine besonders vorteilhafte Ausführungsform einer Dosiervorrichtung 105 des erfindungsgemässen Dosiersystems ist in Figur 12 schematisch dargestellt, mit einer Vorrichtung 96 zur Entnahme einer Probe aus der Kulturmedium 7 während der Kultivierung.

Das Dosiersystem 105 umfasst eine Dosiervorrichtung 87, eine Steuerungsvorrichtung 99, und eine Druckversorgungseinheit 46. Die Dosiervorrichtung 87 weist einen Tropfenerzeuger 33 auf, welcher Fluid 31 aus einem Vorratsbehälter 30 bezieht, welcher durch die Druckversorgungseinheit 46 mit Druck beaufschlagt ist.

Zusätzlich ist an die Druckversorgungseinheit 46 ein 2/2-Wege-Ventil 50 angeschlossen, welches vom Prozessregler 43 über einen Ventiltreiber 44a ansteuerbar ist. Soll eine Probe entnommen werden, so wird das Ventil 50 geöffnet, wodurch der Innenraum des Reaktors 2 über eine Schnellkupplung 28a und einen Sterilfilter 29a mit Druck beaufschlagt wird. Während der Probeentnahme bleibt der Tropfenerzeuger 33 ausser Betrieb. Die Prozessregeleinheit 43 steuert über einen Ventiltreiber 44b ein Probeentnahmeventil 51 an. Der Überdruck im Reaktionsgefäss 2 fördert nun eine Probe 53 des Kulturmediums 7 durch das Probeentnahmeventil 51 in einen Probenbehälter 52. Die entnommene Probe 53 sammelt sich im Behälter 52, welcher über einen Sterilfilter-Entlüfter 38 entlüftet wird.

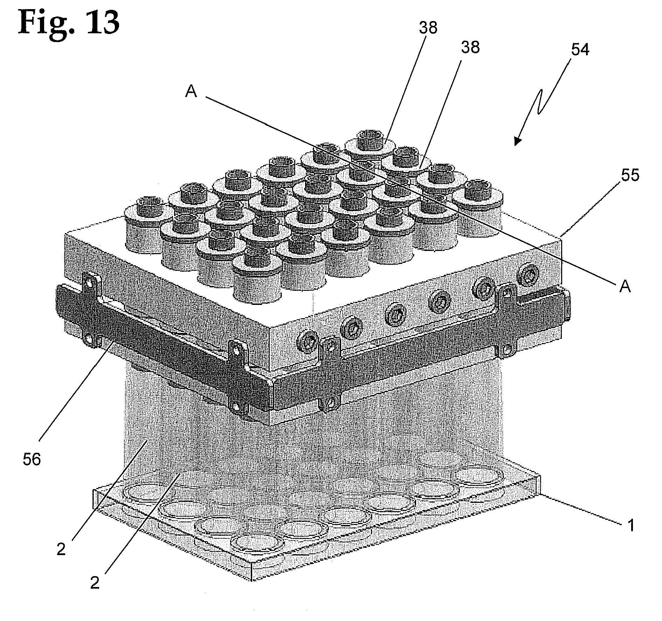

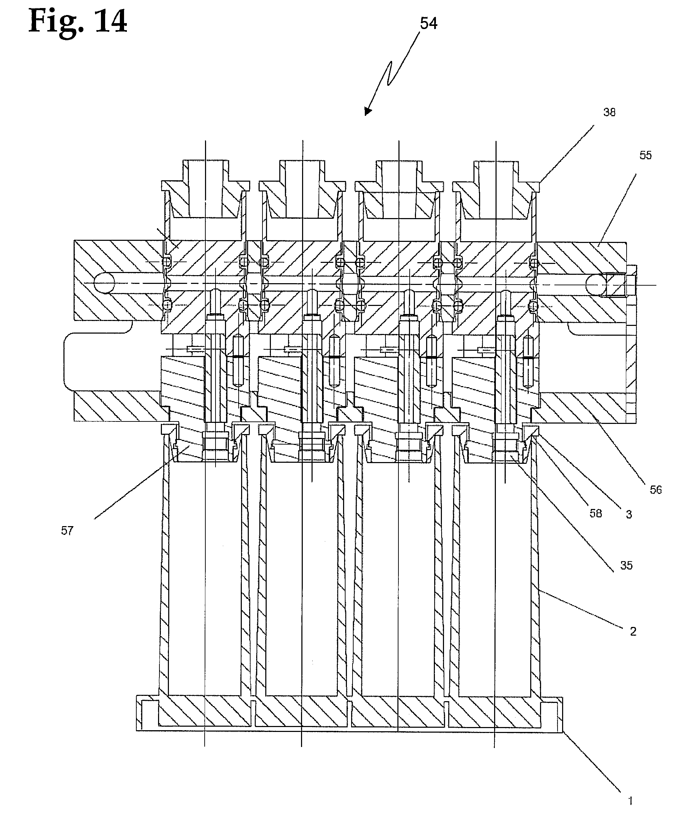

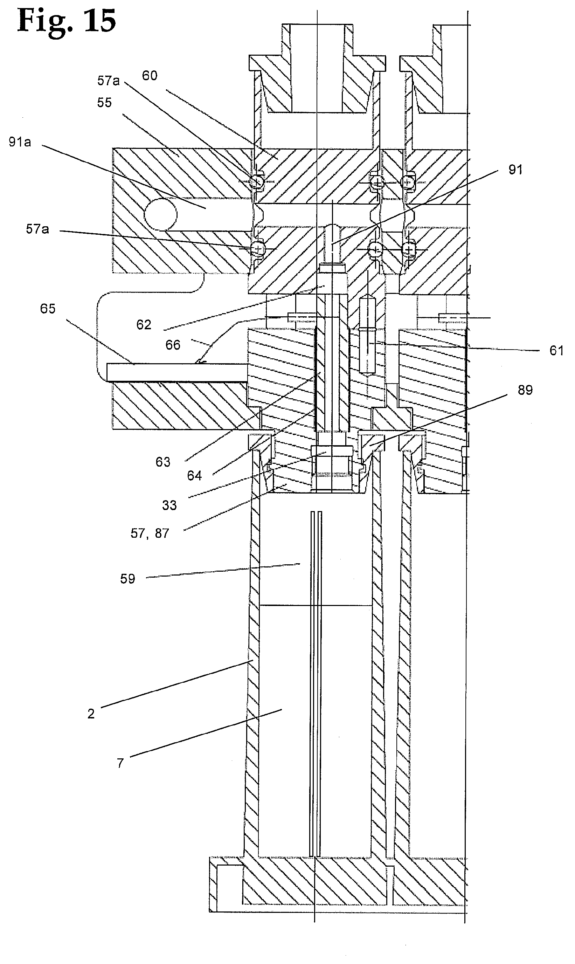

Für die Verwendung einer Dosiervorrichtung 87 des erfindungsgemässen Dosiersystems 105 für eine Mehrzahl von strukturell gekoppelten Reaktionsgefässen, wie beispielsweise einer 24er-Multiwell-Bioreaktorplatte 1, wie sie in Figur 5 gezeigt ist, werden anstatt einzelner Dosiervorrrichtungen 87 für die einzelnen Reaktoren vorzugsweise Mehrfach-Dosiervorrichtungen 54 verwendet. Figur 13 zeigt eine perspektivische Ansicht einer 24er-Bioreaktorplatte 1 mit 24 Bioreaktoren 2, auf welche eine 24-kanalige erfindungsgemässe Mehrfach-Dosiervorrichtung 54 aufgesteckt ist. Figur 14 zeigt einen Querschnitt durch die Mehrfach-Dosiervorrichtung 54 und die Reaktorplatte 1 entlang der Linie A-A, und Figur 15 zeigt ein Detail aus Figur 14.

Die Mehrfach-Dosiereinheit 54 umfasst eine Rasterplatte 56, mit einer Lochung, welche der Anordnung der Bioreaktoren auf der Bioreaktorenplatte 1 entspricht. Die Rasterplatte richtet die Einsätze auf das Rastermass aus. In den Löchern der Rasterplatte 56 sind einzelne Dosiervorrichtungen 87 in Form von Einsätzen 57 angeordnet. Rasterplatte und Einsätze sind mit einer radialen Spielpassung von 0.5 mm vorgesehen.

In den Dosiervorrichtungs-Einsätzen 87, 57 ist exzentrisch ein Tropfenerzeuger 33 angeordnet. Im gezeigten Beispiel ist der Tropfenerzeuger in den Einsatz eingeschraubt, wobei ein O-Ring die Verbindung steril abdichtet. Die exzentrische Anordnung stellt sicher, dass auch bei Bioreaktoren 2 mit zentral angeordnetem Begasungsrohr 59 alle zudosierten Tropfen in das Kulturmedium 7 gelangen. Ein Stift 61 in einer Bohrung 62 definiert die rotatorische Lage von Mehrfachverteiler 55 und Einsatz 57 zueinander. Somit ist sichergestellt, dass die Zuleitung 91 des Einsatzes 57, 87 korrekt auf die Zuleitung 91a im Mehrfachverteiler 55 ausgerichtet ist.

Die Spule 63 des elektromagnetisch betätigten Ventils 35 ist fest in den Einsatz 57 eingeklebt. Der verwendete Kleber ist FDA (United States Food and Drug Administration) konform und autoklavierbar. Der Kleber füllt die Ringspalte 64 zwischen Spule und Einsatz vollständig aus und vermeidet somit ein für das Autoklavieren unvorteilhaftes Totvolumen. Alternative mechanische Befestigungsarten wie Klemmen, Pressen, Schrauben etc. sind ebenfalls möglich, aber aufwendiger.

Für die elektrische Kontaktierung der Spulen 63 der Mehrfach-Dosiervorrichtung ist eine Leiterplatte 65 vorgesehen. An die Spule 63 ist ein Kabelpaar 66 angelötet, welches mit der Leiterplatte 65 verbunden ist. Mit der verwendeten Leiterplatte entfällt ein aufwändig aufgebauter und schwierig zu montierender Kabelbaum.

Über der Rasterplatte 56 ist eine Mehrfachverteilerplatte 55 angeordnet, welche eine zentrale Fluidzuleitung 91a für alle Zuleitungen der einzelnen Dosiervorrichtungen 87, 57 der Mehrfach-Dosiervorrichtung 54 umfasst. O-Ringe 57a dichten die Verbindung zwischen den Zuleitungen 91, 91a steril ab. Die Rasterplatte ist mit dem Mehrfachverteiler gekoppelt und drückt die Einsätze gegen den Mehrfachverteiler.

Am dem Bioreaktor 2 zugeordneten Längsende der Dosiervorrichtung 57 ist ein Verschlusselement 89 in Form einer konischen Dichtung angeordnet, mit welcher der Bioreaktor von der Umgebung dicht abgeschlossen wird. Die Dichtung ist aus Silikon gefertigt und kann Abweichungen vom idealen Rastermass von 0.1 bis 0.3 mm ausgleichen. Diese Variante hat den Vorteil, dass eine Dosiervorrichtung des erfindungsgemässen Dosiersystems mit geringem Kraftaufwand auf einem Bioreaktor zu montieren und zu demontieren ist, und trotzdem den Bioreaktor steril abdichtet. Auch O-Ringe könnten verwendet werden. Herkömmliche O-Ringe sind jedoch zu hart, verhaken sich beim Montagevorgang leicht an der scharfen Innenkante des Bioreaktors und werden dort angeschnitten.

Eine Längsbohrung (nicht sichtbar) verbindet das reaktorseitige Ende der einzelnen Dosiervorrichtung 87 mit einem am entgegen gesetzten Ende angebrachten herkömmlichen Sterilfilter-Entlüfter 38. Dieser kann nach Gebrauch ausgetauscht werden.

Die Mehrfach-Dosiereinheit wird im gezeigten Beispiel nur durch wird nur durch die Haftreibungskräfte der Sterildichtung 89 auf der Bioreaktorplatte gehalten. Es hat sich gezeigt, dass bei Verwendung in Kombination mit einem Orbitalschüttler mit 800 min-1 die Masse der Dosiereinheit 54 vorzugsweise kleiner 1 kg sein sollte, damit zum einen der Orbitalschüttler nicht mechanisch überlastet wird und zum anderen die Dosiereinheit 54 nicht weggeschleudert wird.

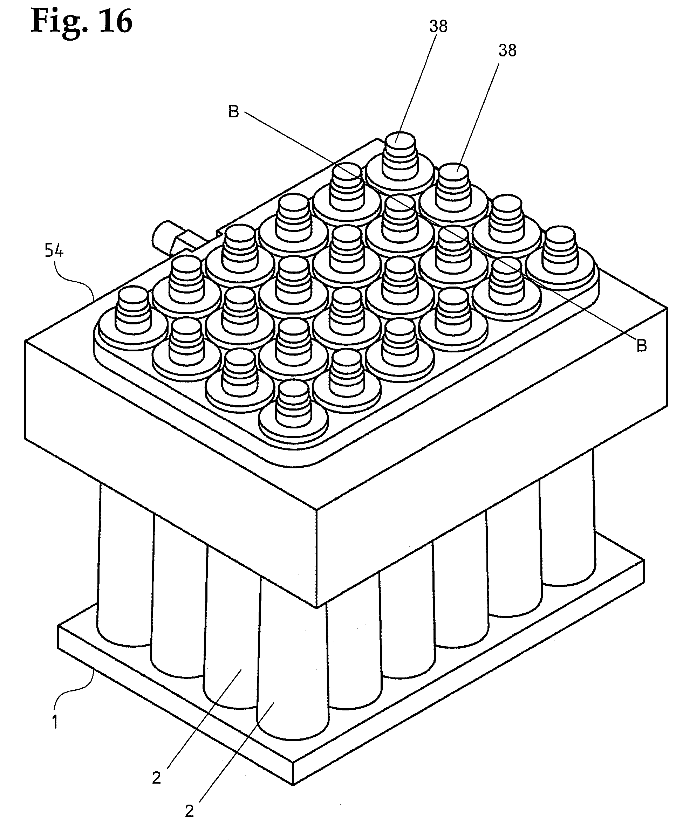

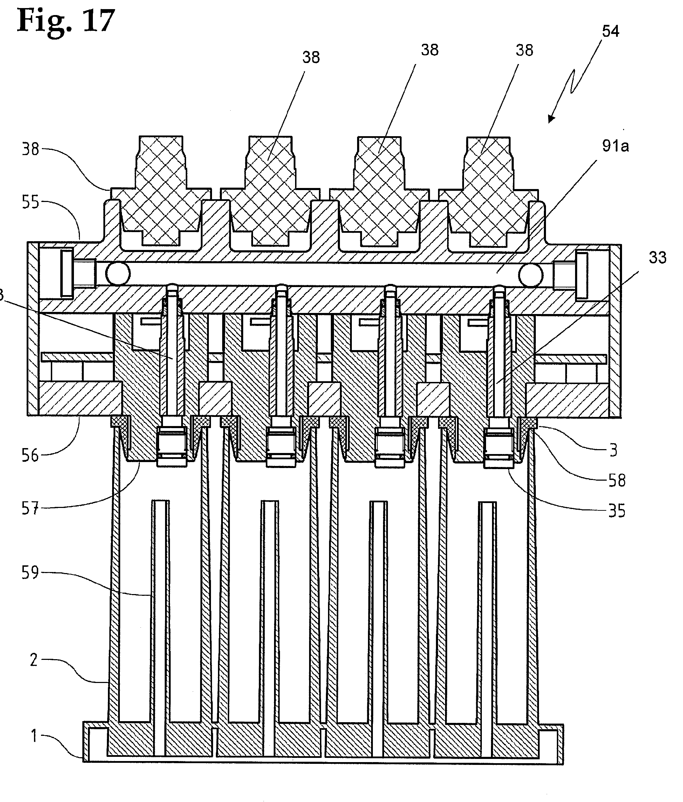

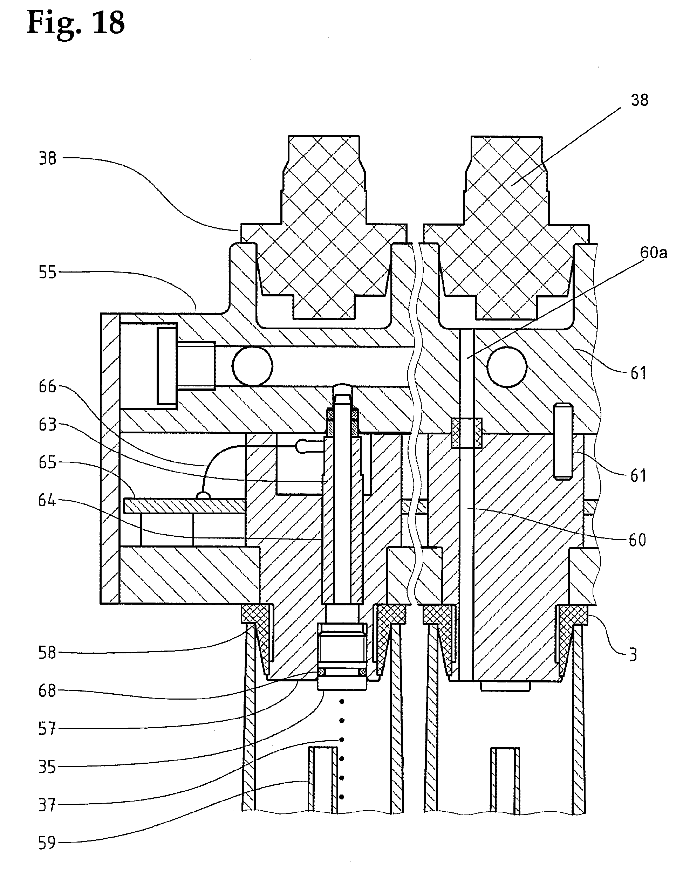

In einer vorteilhaften Variante einer Dosiervorrichtung des erfindungsgemässen Dosiersystems sind Entlüftungsleitungen im Mehrfachverteiler 55 vorgesehen, die von einem in einer Öffnung des Mehrfachverteilers 55 angebrachten Sterilfilter-Entlüfter 38 über eine Entlüftungsbohrung 60a zu einer Entlüftungsbohrung im Einsatz 57 führen. Figuren 16 bis 18 zeigen eine solche Ausführungsform einer Dosiervorrichtung 54 des erfindungsgemässen Dosiersystems.

Der Einsatz 57 mit dem exzentrisch angeordneten Tropfenerzeuger 33 ist von oben durch das Rasterloch der Rasterplatte 56 geschoben. Von unten ist die konische Dichtung 58 auf den Einsatz 57 gestülpt. Die Einsätze 57 werden zwischen Rasterplatte 56 und Mehrfachverteilerplatte 55 formschlüssig gehalten.

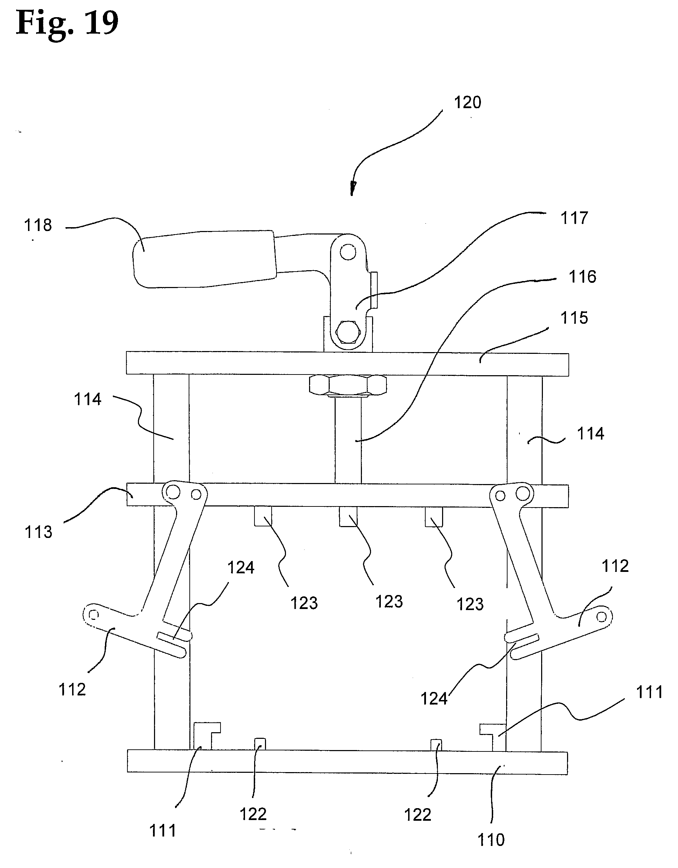

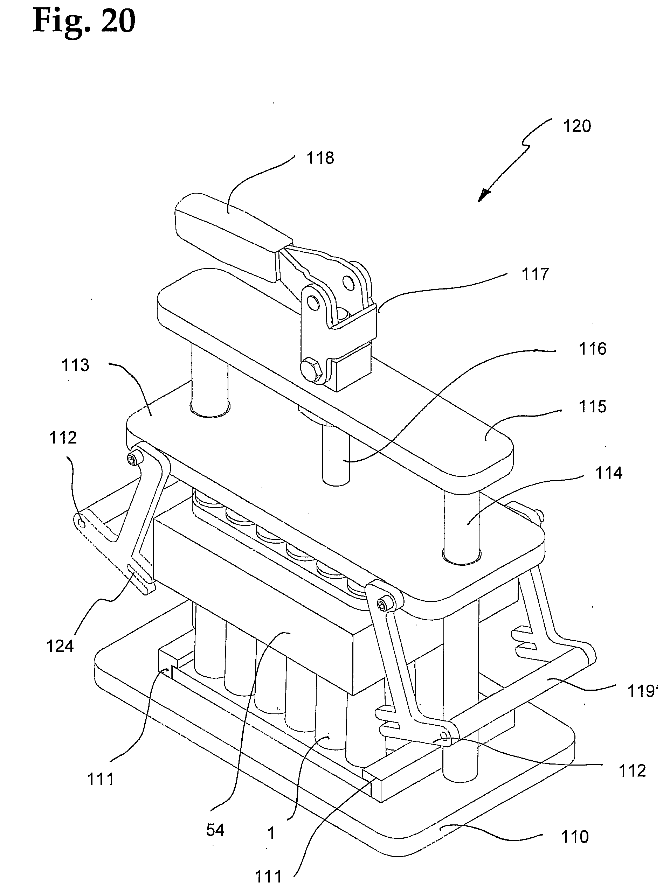

Die Montage und Demontage einer erfindungsgemässen Mehrfach-Dosiereinheit 54 auf einer Bioreaktorplatte erfolgt unter sterilen Bedingungen in einer Laminar-Flow-Werkbank mit Hilfe eines Montagewerkzeuges. Die Figuren 19 und 20 zeigen eine Montagevorrichtung 120 für eine Mehrfach-Dosiervorrichtung 54.

Die Montagevorrichtung 120 umfasst in der dargestellten bevorzugten Ausführungsform eine Grundplatte 110 mit zwei Niederhaltern 111, in welche die Bioreaktorplatte 1 eingeschoben werden kann. Zwei Führungssäulen 114 tragen einen Balken 115 und eine Hebevorrichtung 117 mit Kniehebel 118. Diese ist über einen Bolzen 116 mit einer Pressplatte 113 verbunden, die von den Tragsäulen 114 durchstossen wird, so dass die Pressplatte 113 auf den Tragsäulen 114 verschiebbar gelagert ist. Zwei Haken 112 sind seitlich an der Pressplatte 113 angebracht und schwenkbar gelagert.

Bei der Montage wird die Mehrfach-Dosiervorrichtung 54 des erfindungsgemässen Dosiersystems auf die Bioreaktorplatte 1 aufgelegt, wobei die konischen Sterildichtungen 89 die Dosiervorrichtung positionieren. Die Bioreaktorplatte 1 wird auf der Grundplatte 110 in die Niederhalter 111 eingeschoben. Durch die schwenkbare Lagerung der Haken 112 an der Führungsplatte 113 kann die Dosiervorrichtung mit der Bioreaktorplatte ungehindert in die Montagevorrichtung 120 eingesetzt werden. Anschlagsbolzen 122 auf einer Längsseite zwischen den Halterungen 111 stellen eine exakte Positionierung sicher. Mittels Kniehebel 118 wird nun die Pressplatte 113 ruckfrei nach unten gedrückt. Die Pressplatte 113 wird dabei mit den Führungssäulen 114 geführt. Drei Distanzelemente 123 übertragen die Kraft auf die Dosiervorrichtung, so dass die Sterilfilter-Entlüfter nicht beschädigt werden. In einer vorteilhaften Variante können die Distanzelemente 123 als Federelemente ausgeführt sein, um eine definierte Anpresskraft zu erreichen.

Bei der Demontage einer Dosiervorrichtung 54 des erfindungsgemässen Dosiersystems wird die Bioreaktorplatte 1 mit montierter Mehrfach-Dosiervorrichtung 54 auf der Grundplatte 110 in die Halterungen 111 eingeschoben, wodurch sie durch die Halterungen 111 in vertikaler Richtung fixiert ist. Durch die schwenkbare Lagerung der Haken 112 an der Pressplatte 113 kann die Dosiervorrichtung mit der Bioreaktorplatte ungehindert in die Montagevorrichtung 120 eingesetzt werden. Anschlagsbolzen 112 auf einer Längsseite zwischen den Halterungen 111 stellen wiederum eine exakte Positionierung sicher.

Anschliessend werden die Haken 112 vom Benutzer mit Hilfe der Griffe 119' heruntergeklappt und untergreifen die Dosiervorrichtung 54. Durch die Betätigung des Kniehebels 118 wird nun die Pressplatte 113 ruckfrei nach oben gezogen, und dabei über die Haken 112 die Dosiervorrichtung 54 von der Bioreaktorplatte 1 weggehoben. Diese kann dann wieder aus den Niederhaltern 111 herausgezogen werden. Vorteilhaft an dieser Montagevorrichtung ist dabei unter anderem, dass die vertikale Zugkraft, die notwendig ist um die Dosiervorrichtung 54 von der Bioreaktorplatte zu lösen, regelmässig übertragen wird, sodass die Dosiereinheit 54 bei der Demontage nicht abkippen kann. Eine Kreuzkontamination benachbarter Reaktionsgefässe durch herumschwappendes Kulturmedium kann so vermieden werden.

Um bei Herausziehen der Bioreaktorplatte aus der Montagevorrichtung 120 eine Kreuzkontamination zu vermeiden, kann vorher zwischen Bioreaktor und Dosiervorrichtung in die Führungsschlitze 124 ein Abtropfblech (nicht dargestellt) eingeschoben werden.

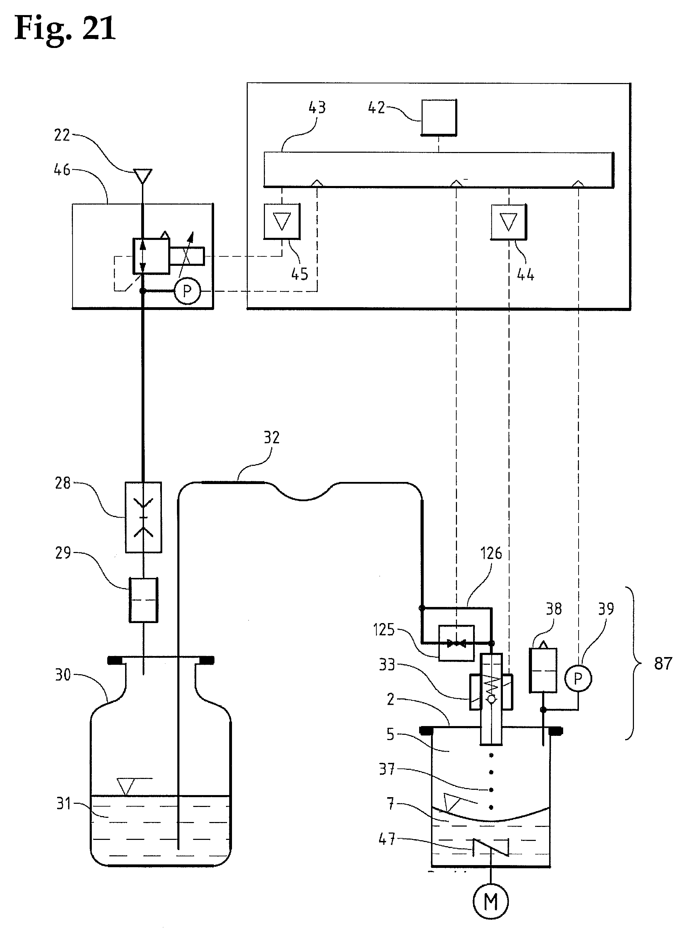

Figur 21 zeigt eine weitere Ausführungsform der Vorrichtung des erfindungsgemässen Dosiersystems, welche um einen Drucksensor 125 und einen Bypass 126 erweitert ist. Der Drucksensor 125 ist möglichst nahe beim Tropfenerzeuger 33 angeordnet. Mit dem Drucksensor 125 wird der für die Dosierung notwendige wirksame Druck im Fluid 31 direkt beim Einlass des Tropfenerzeugers gemessen. Abweichungen vom notwendigen erforderlichen Differenzdruck über dem Tropfenerzeuger 33 infolge von Strömungsverlusten in der Transferleitung 32 und infolge statischer Druckunterschiede durch die unterschiedliche Höhenanordnung von Vorratsbehälter 30 und Bioreaktor 2 können somit gemessen werden. Die Regelung erfolgt durch den Prozessregler 43. Die Dosier-Genauigkeit wird messbar verbessert. Der Bypass 126 sorgt dafür, dass der Volumenstrom im Drucksensor 125 klein bleibt und die Druckmessung nicht nachteilig beeinflusst wird. In der dargestellten Ausführungsform ist der Drucksensor 125 über dem Tropfenerzeuger 33 angeordnet. In einer weiteren Ausführungsform (in Figur 21 nicht dargestellt) ist der Drucksensor 125 in den Tropfenerzeuger 33 integriert. In einer weiteren Ausführungsform wird ein Drucksensor 125 ohne den Bypass eingesetzt.

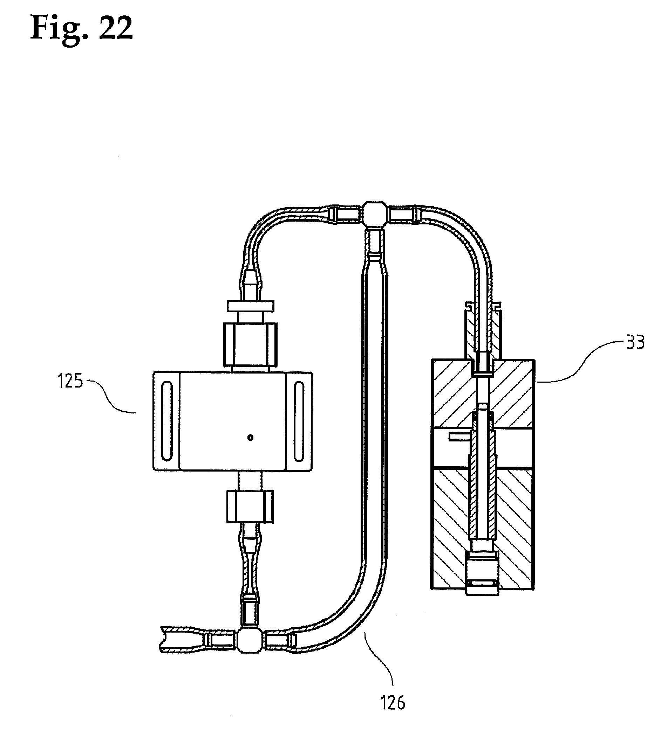

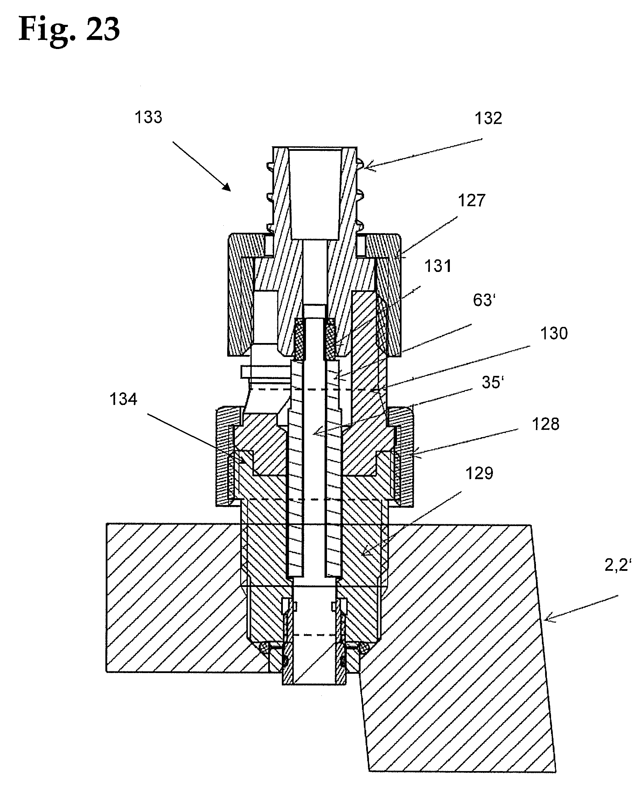

Figur 22 zeigt eine bevorzugte Anordnung des Drucksensors 125 und des Bypasses 126 am Tropfenerzeuger 33. Beim Drucksensor 125 handelt es sich mit Vorteil um einen kostengünstigen Einweg-Drucksensor, beispielsweise der Firma PendoTECH mit Sitz in Princeton USA. Dieser Drucksensor ist für einige wenige Zyklen autoklavierbar. Der Strömungsquerschnitt vom Bypass 126 ist deutlich grösser als der Strömungsquerschnitt im Drucksensor 125. Durch die Bypass-Schaltung bleibt der Drucksensor 125 mit Fluid durchströmt, so dass sich kein Belag im Drucksensor 125 absetzen kann. Der Drucksensor 125 ist auf der Höhe vom Einlass des Tropfenerzeugers 33 positioniert, so dass sich ein möglichst geringer statischer Druckunterschied zwischen Drucksensor 125 und Tropfenerzeuger 33 einstellt. Figur 23 zeigt einen Adapter 133 zum Aufsetzen auf den Bioreaktor 2. Der Adapter 133 ist zweiteilig ausgeführt und umfasst einen unteren Adapterteil 129 und einen oberen Adapterteil 130. Die zweiteilige Ausführung ermöglicht eine verbesserte Ausrichtung des Adapters 133 bei der Montage auf dem Bioreaktor 2. Der obere und der untere Adapterteil werden mittels Zentriersitz 134 zueinander konzentrisch ausgerichtet auf der Bioreaktorplatte 2 positioniert. Eine untere Überwurfmutter 128 fixiert die Adapterteile. In den oberen Adapterteil 130 wird ein Transferleitungsanschluss 132 konzentrisch eingesetzt und mit einer oberen Überwurfmutter 127 fixiert. Der Transferleitungsanschluss 132 dient gleichzeitig als Sitz für eine Silikon-Dichtung 131, welche den Transferleitungsanschluss 132 dichtend mit dem Ventil 35' verbindet. Die Spule ist als Magnetspule 63' ausgeführt.

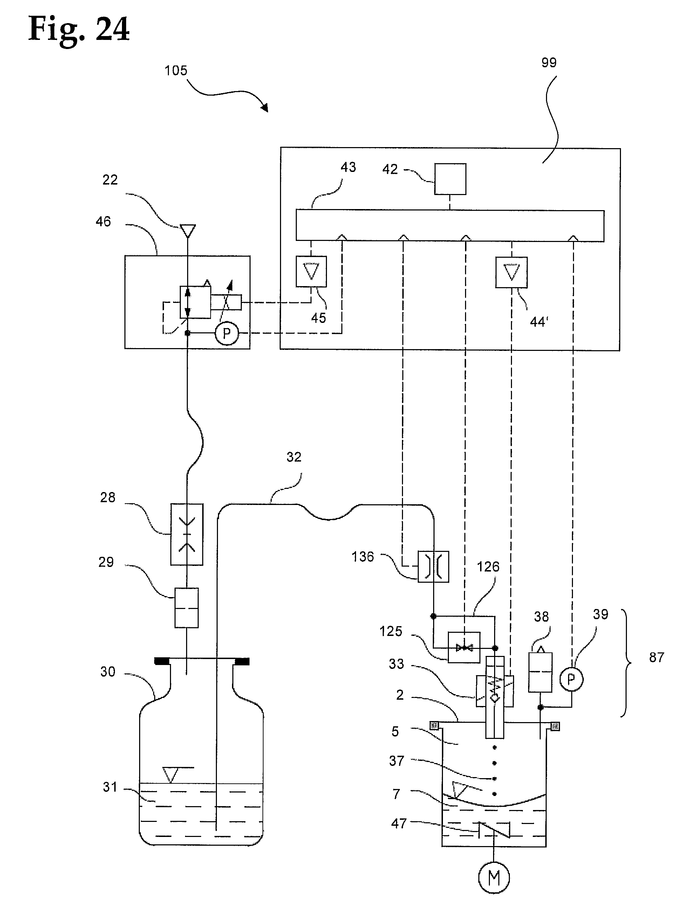

Figur 24 zeigt eine weitere Ausführungsform des in Figur 7 und in Figur 21 dargestellten Dosiersystems, wobei das Dosiersystem um einen Durchflusssensor 136 erweitert ist. Beim Durchflusssensor 136 handelt es sich um ein Dosierratenbestimmungsmittel angeordnet in der Transferleitung 32. Das Dosierratenbestimmungsmittel bestimmt die zweite Dosierrate beim Eintritt des Fluids in den Tropfenerzeuger 33.

Das Fluid wird mittels eines Überdrucks im Vorratsbehälter 30 über die Transferleitung 32 vom Vorratsbehälter 30 zur Zuleitung des Tropfenerzeugers 33 gefördert. Der Tropfenerzeuger 33 dosiert das Fluid 31 zu einzelnen Tropfen 37, mit einem definierten Volumen von 100 nl bis 100 µl. Durch Steuerung der Frequenz und der Öffnungszeit des elektromagnetisch betätigbaren Ventils mit Hilfe der Steuerungsvorrichtung 99 des Tropfenerzeugers 33 gelangt eine definierte Menge des Fluids 31 in die Düse und verlässt diese als einzelner Tropfen 37. Der Tropfen 37 durchquert den Kopfraum 5 und trifft auf das Kulturmedium 7 auf. Dort vermischt es sich anschliessend mit dem Kulturmedium 7, welches mit Hilfe eines Rührers 47 in Bewegung gehalten wird. Durch wiederholtes Öffnen des Ventils 35 kann der Tropfenerzeuger 33 eine genau bestimmte Anzahl Tropfen 37 erzeugen, und so eine bestimmte erste Dosierrate erzielen. Zur Verbesserung der Genauigkeit des erfindungsgemässen Dosiersystems wird mit Hilfe eines Durchflusssensors eine zweite Dosierrate gemessen und von der Steuerungsvorrichtung 99 erfasst. Entspricht dieser Wert nicht der ersten von der Steuerungsvorrichtung bestimmten Dosierrate, wird mit Hilfe der Prozessregeleinheit 43 der Ventiltreiber 44' angesteuert und die Stellwerte, umfassend beispielsweise die Frequenz und die Öffnungsdauer des Tropfenerzeugers 33, angepasst. In einer weiteren Ausführungsform kann auf einen Drucksensor 125 verzichtet werden, wenn der Durchflusssensor 136 verwendet wird.

Der Drucksensor 125 ist möglichst nahe beim Tropfenerzeuger 33 angeordnet. Mit dem Drucksensor 125 wird der für die Dosierung notwendige wirksame Druck im Fluid 31 direkt beim Einlass des Tropfenerzeugers gemessen. Abweichungen vom notwendigen erforderlichen Differenzdruck über dem Tropfenerzeuger 33 infolge von Strömungsverlusten in der Transferleitung 32 und infolge statischer Druckunterschiede durch die unterschiedliche Höhenanordnung von Vorratsbehälter 30 und Bioreaktor 2 können somit gemessen und durch den Prozessregler 43 ausgeregelt werden. Die Dosier-Genauigkeit wird messbar verbessert. Der Bypass 126 sorgt dafür, dass der Volumenstrom im Drucksensor 125 klein bleibt und die Druckmessung nicht nachteilig beeinflusst wird. In der dargestellten Ausführungsform ist der Drucksensor 125 über dem Tropfenerzeuger 33 angeordnet.

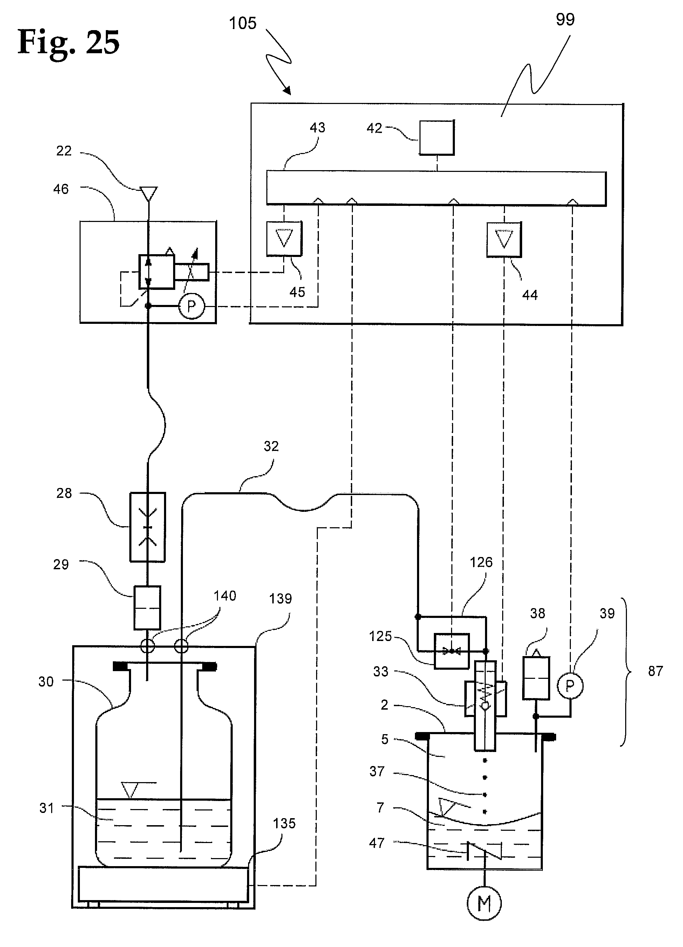

Figur 25 zeigt das gleiche Dosiersystem aus Figur 24 mit dem Unterschied, dass die zweite gemessene Dosierrate durch ein Wiegemittel 135 bestimmt wird. Bevorzugt handelt es sich bei den Wiegemitteln 135 um eine Präzisionswaage. Die Ausführungsform nach Figur 25 zeigt mindestens einen Vorratsbehälter 30, positioniert auf dem Wiegemittel 135. Um das Wiegemittel 135 von Störeinflüssen zuschützen, wird der mindestens eine Vorratsbehälter 30 und das Wiegemittel 135 von einem Gehäuse 139 umgeben. Das Gehäuse 139 weist Öffnungen, vorzugsweise mit Fixiermitteln 140 auf, die als Anschlüsse für die Druckversorgungseinheit 46 und für die Transferleitung 32 dienen. Das Wiegemittel 135 misst das Gewicht des Fluids 31 im Vorratsbehälter 30 bei der Zudosierung des Fluids in das Reaktionsgefäss 2. Die auf diese Weise gemessene zweite Dosierrate wird mit der ersten von der Steuerungsvorrichtung bestimmten Dosierrate verglichen. Bei einer Abweichung werden mit Hilfe der Steuerungsvorrichtung 99 die Stellwerte, z.B. Frequenz und Öffnungszeit des Tropfenerzeugers 33, angepasst. Neben dem Wiegemittel 135 dient auch der Drucksensor 125 und der Bypass 126 dazu die Dosiergenauigkeit des erfindungsgemässen Dosiersystems zu verbessern.

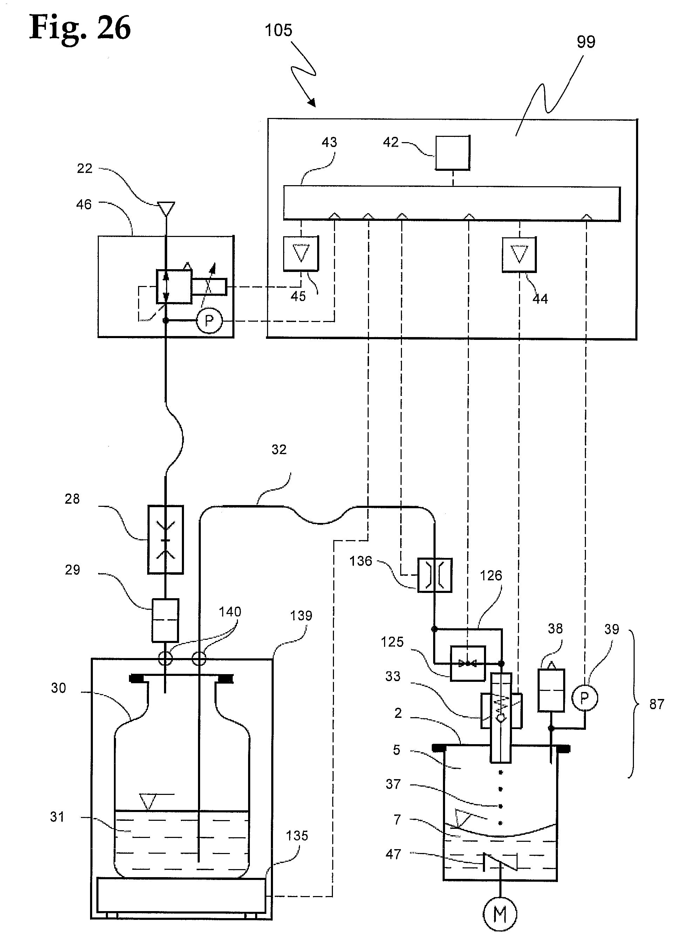

Figur 26 zeigt das erfindungsgemässe Dosiersystem aus Figur 24 und Figur 25, wobei beide Dosierratenbestimmungsmittel, die Wiegemittel 135 und der Durchflusssensor 136, vorhanden sind und der Drucksensor 125 mit Bypass 126 eingesetzt ist.

### Bezugszeichenliste

- 1: Multiwell-Bioreaktorplatte
- 2, 2': Reaktionsgefäss, Bioreaktor
- 3: Sterildichtung
- 4: Sterilfilter
- 5: Kopfraum
- 6: Flüssigkeitsniveau, Flüssigkeitsoberfläche
- 7: Kulturmedium
- 8: Wärmeleiter
- 9: Temperatursensor
- 10: pH-empfindliches Material
- 11: Optischer Sensor
- 12: CO₂-Zufuhr
- 13: O₂/Luft-Zufuhr
- 14: NH₃-Zufuhr
- 15: Dichtelement
- 16: Sterile semipermeable Membrane
- 17: DO empfindliches Material
- 18: Optischer DO Sensor
- 19: Wärmeleiter
- 20: Heizung
- 21: Gasblasen
- 22: Druckluftquelle
- 23: Wartungseinheit
- 24: Mikrofilter
- 25: Elektropneumatischer Druckregler
- 25a: Drucksensor
- 26: Absperrventil
- 27: Manometer
- 28, 28a, 28b: Schnellkupplung
- 29, 29', 29a: Sterilfilter
- 30: Vorratsbehälter
- 31, 31': Fluid
- 32, 32': Transferleitung
- 33, 33': Tropfenerzeuger
- 34: Partikelfilter
- 35: Ventil, Magnetventil
- 36: Düse
- 37: Tropfen, zudosiertes Fluidvolumen
- 38: Sterilfilter-Entlüfter, Entlüftungsvorrichtung
- 39: Drucksensor, Vorrichtung zum Messen des Drucks
- 40: Sensoren für T, pH, DO, X
- 41: Orbitalschüttler
- 42: Kultivierungsprogramm
- 43: Prozessregler, Prozessregeleinheit
- 44, 44': Ventiltreiber
- 44a, 44b: Ventiltreiber
- 45: Sollwertsignal Druck
- 46: Druckversorgungseinheit, Vorrichtung zur Druckbeaufschlagung
- 47: Rührer
- 48: Druckkammer
- 49: Beutel
- 49a: Entnahmeleitung
- 49b: Sterilkupplung
- 50: Ventil
- 51: Probeentnahmeventil
- 52: Probenbehälter
- 53: Proben-Fluid, Probe
- 54: 24-kanalige Dosiervorrichtung, Mehrfach-Dosiervorrichtung
- 55: Mehrfachverteiler, Verteilerplatte
- 56: Rasterplatte
- 57: Einsatz
- 57a: O-Ring
- 58: Innenkante
- 59: Begasungsrohr
- 60: Entlüftungsbohrung
- 60a: Entlüftungsbohrung
- 61: Stift
- 62: Bohrung
- 63, 63': Spule, Magnetspule
- 64: Ringspalte
- 65: Leiterplatte
- 66: Kabel
- 67: Einschraubteil
- 68: O-Ring
- 69: Dichtring
- 70: Gewinde
- 71: Anschlag
- 72: Gewinde
- 73: Spulenhalter
- 74: Schnappverbinder
- 75: Schlauchanschluss
- 76: Klemmstück
- 77: Befestigungsbohrung
- 78: Anschlussdrähte
- 79: Gewinde
- 80: O-Ring
- 81: Federelement
- 82: Niederhalter
- 83: Überwurfmutter
- 84: Dichtung
- 85: geteilte Doppelkonusdichtung
- 86: Spannring
- 87, 87': Dosiervorrichtung
- 89: Verschlusselement
- 91: Zuleitung
- 35': Ventilkugel
- 35": Ventilsitz
- 96: Vorrichtung zur Entnahme von Proben
- 99: Steuerungsvorrichtung
- 105: Dosiersystem
- 110: Grundplatte
- 111: Niederhalter
- 112: Haken
- 113: Pressplatte
- 114: Führungssäule
- 115: Balken
- 116: Bolzen
- 117: Hebevorrichtung
- 118: Kniehebel
- 119: Innenwand
- 119': Griff
- 120: Montagevorrichtung
- 121: Innenwand
- 122: Anschlagsbolzen
- 123: Distanzelement
- 124: Führungsschlitz
- 125: Drucksensor
- 126: Bypass
- 127: obere Überwurfmutter
- 128: untere Überwurfmutter
- 129: unterer Adapterteil
- 130: oberer Adapterteil
- 131: Silikondichtung
- 132: Feedadapter
- 133: Adapter
- 134: Zentriersitz
- 135: Wiegemittel
- 136: Durchflusssensor
- 139: Gehäuse
- 140: Fixiermittel
- DR1, DR2: Dosierrate
- SW: Stellwert
- Q1, Q2: erster Strömungsquerschnitt, zweiter Strömungsquerschnitt

## Patentansprüche

1. Dosiersystem (105) zum Dosieren von mindestens einem Fluid (31, 31') mit einer bestimmten ersten Dosierrate (DR1) von mindestens einem Vorratsbehälter (30) in ein oder mehrere Reaktionsgefässe (2, 2'), **gekennzeichnet durch** mindestens eine Dosiervorrichtung (87, 87', 54), Mittel zur Bestimmung eines ersten Drucks (p1) nach der Dosiervorrichtung (87, 87', 54) und Mittel zur Bestimmung eines zweiten Drucks (p2) vor der Dosiervorrichtung, eine Vorrichtung zur Druckbeaufschlagung (46), wobei die Vorrichtung dazu geeignet ist, das Fluid im Vorratsbehälter (30) mit dem zweiten Druck (p2) zu beaufschlagen, und eine Steuerungsvorrichtung (99), wobei die Steuerungsvorrichtung (99) dazu geeignet ist, basierend auf einem Differenzdruck zwischen dem zweiten Druck (p2) und dem ersten Druck (p1) und der bestimmten ersten Dosierrate (DR1) mindestens ein Stellwert (SW) für die Dosiervorrichtung (87, 87', 54) festzulegen, und Dosierratenbestimmungsmittel (135, 136), wobei die Dosierratenbestimmungsmittel (135, 136) dazu geeignet sind, eine zweite Dosierrate (DR2) zu messen, und die Steuerungsvorrichtung (99) dazu geeignet ist, basierend auf einer Differenz zwischen der ersten bestimmten Dosierrate (DR1) und der zweiten gemessenen Dosierrate (DR2) den mindestens einen Stellwert (SW) nachzuregeln.

2. Dosiersystem nach Anspruch 1, **dadurch gekennzeichnet, dass** das Dosierratenbestimmungsmittel (135,136), vorzugsweise Wiegemittel (135), besonders bevorzugt eine Präzisionswaage umfassen.

3. Dosiersystem nach Anspruch 2, **dadurch gekennzeichnet, dass** das mindestens eine Wiegemittel (135) geeignet ist die zweite gemessene Dosierrate (DR2) zu messen, indem eine Massendifferenz des Fluids im Vorratsbehälter (30, 30') innerhalb eines bestimmten Messintervalls bestimmt wird.

4. Dosiersystem nach einem der vorangegangenen Ansprüche, **dadurch gekennzeichnet, dass** das Dosierratenbestimmungsmittel (135, 136) einen Durchflusssensor (136) umfasst, wobei der Durchflusssensor (136) in einer Transferleitung (32, 32') zwischen dem mindestens einen Vorratsbehälter (30, 30') und der Dosiervorrichtung (87, 87') angeordnet ist und dazu geeignet ist, die zweite gemessene Dosierrate (DR2) zu ermitteln.

5. Dosiersystem nach Anspruch 4, **dadurch gekennzeichnet, dass** es sich beim Durchflusssensor um einen Single-Use Durchflusssensor handelt.

6. Dosiersystem nach einem der vorangegangenen Ansprüche, **dadurch gekennzeichnet, dass** das Mittel zur Bestimmung eines zweiten Drucks (p2) einen Drucksensor (125) umfasst.

7. Dosiersystem nach Anspruch 6, **dadurch gekennzeichnet, dass** der Drucksensor (125) in die Dosiervorrichtung (87, 87', 54) integriert ist.

8. Dosiersystem nach Anspruch 6 oder 7, **dadurch gekennzeichnet, dass** der Drucksensor (125) einen Bypass (126) umfasst.

9. Dosiersystem nach Anspruch 8, **dadurch gekennzeichnet, dass** der Drucksensor (125) einen ersten Strömungsquerschnitt (Q1) und der Bypass einen zweiten Strömungsquerschnitt (Q2) aufweist, wobei der Strömungsquerschnitt (Q2) des Bypass grösser ist als der Strömungsquerschnitt (Q1) des Drucksensors.

10. Dosiersystem nach einem der vorangegangenen Ansprüche, **dadurch gekennzeichnet, dass** eine Vorrichtung (96) zur Entnahme von Proben aus dem Reaktionsgefäss (2, 2') vorgesehen ist.

11. Verfahren zur Dosierung eines Fluids mit einer bestimmten ersten Dosierrate (DR1) aus einem Vorratsbehälter (30) in ein Reaktionsgefäss (2, 2') mit einer Dosiervorrichtung (87, 87', 54), die dazu geeignet ist, einzelne Tropfen des Fluids zu erzeugen, **dadurch gekennzeichnet, dass** ein zweiter Druck (p2) vor der Dosiervorrichtung (87, 87', 54) und ein erster Druck (p1) nach der Dosiervorrichtung (87, 87', 54) erfasst wird und aus der Differenz zwischen dem zweiten Druck (p2) und dem ersten Druck (p1) ein Differenzdruck (p2-p1) gebildet wird, und aus dem Differenzdruck (p2-p1) und der bestimmten ersten Dosierrate (DR1) mindestens ein Stellwert (SW) für die Dosiervorrichtung (87, 87') bestimmt wird, wobei der mindestens eine Stellwert (SW) die Öffnungsdauer und/oder die Frequenz der Dosiervorrichtung (87, 87', 54) umfasst, und durch Dosierratenbestimmungsmittel (135, 136) eine zweite Dosierrate (DR2) gemessen wird; und basierend auf einer Differenz zwischen der ersten bestimmten Dosierrate (DR1) und der zweiten gemessenen Dosierrate (DR2) der mindestens eine Stellwert (SW) nachgeregelt wird.

12. Verfahren nach Anspruch 11, **dadurch gekennzeichnet, dass** eine Steuerungsvorrichtung (99) die Öffnungsdauer und/oder die Frequenz der Dosiervorrichtung (87, 87') derart steuert, dass die zweite gemessene Dosierrate (DR2) der ersten bestimmten Dosierrate (DR1) entspricht.

13. Verfahren nach Anspruch 11, **dadurch gekennzeichnet, dass** die Dosierratenbestimmungsmittel (135, 136) mindestens ein Wiegemittel (135) umfassen, wobei das mindestens eine Wiegemittel (135) unter oder über einem oder mehreren Vorratsbehältern (30) angeordnet ist und einen Gewichtswert des Fluids im Vorratsbehälter (30) bestimmt, wobei die Änderung des Gewichtswerts innerhalb eines bestimmten Messintervalls der zweiten gemessenen Dosierrate (DR2) entspricht.

14. Verfahren nach Anspruch 11, **dadurch gekennzeichnet, dass** die Dosierratenbestimmungsmittel (135, 136) mindestens einen Durchflusssensor (136) umfassen, wobei der Durchflusssensor (136) die zweite gemessene Dosierrate (DR2) bestimmt.

15. Verfahren nach Anspruch 11 bis 14, **dadurch gekennzeichnet, dass** ein Dosiersystem gemäss Anspruch 1 bis 9 eingesetzt wird.

## Claims

1. Metering system (105) for metering at least one fluid (31, 31') at a certain first metering rate (DR1) from at least one storage container (30) into one or more reaction vessels (2, 2'), **characterized by** at least one metering device (87, 87', 54), means for determining a first pressure (p1) downstream of the metering device (87, 87', 54) and means for determining a second pressure (p2) upstream of the metering device, a device for applying pressure (46), wherein the device is suitable for applying the second pressure (p2) to the fluid in the storage container (30), and a control device (99), wherein the control device (99) is suitable for defining at least one control value (SW) for the metering device (87, 87', 54) on the basis of a differential pressure between the second pressure (p2) and the first pressure (p1) and the specific first metering rate (DR1), and metering rate determining means (135, 136), wherein the metering rate determining means (135, 136) is suitable for measuring a second metering rate (DR2), and the control device (99) is suitable for readjusting the at least one control value (SW) on the basis of a difference between the first determined metering rate (DR1) and the second measured metering rate (DR2).

2. Metering system according to Claim 1, **characterized in that** the metering rate determining means (135, 136), preferably a weighing means (135), particularly preferably comprises a precision balance.

3. Metering system according to Claim 2, **characterized in that** the at least one weighing means (135) is suitable for measuring the second measured metering rate (DR2), **in that** a difference in the mass of the fluid in the storage container (30, 30') within a certain measurement interval is determined.

4. Metering system according to one of the preceding claims, **characterized in that** the metering rate determining means (135, 136) comprises a flow sensor (136), wherein the flow sensor (136) is arranged in a transfer line (32, 32') between the at least one storage container (30, 30') and the metering device (87, 87'), and is suitable for determining the second measured metering rate (DR2).

5. Metering system according to Claim 4, **characterized in that** the flow sensor is a single-use flow sensor.

6. Metering system according to one of the preceding claims, **characterized in that** the means for determining a second pressure (p2) comprises a pressure sensor (125).

7. Metering system according to Claim 6, **characterized in that** the pressure sensor (125) is integrated in the metering device (87, 87', 54).

8. Metering system according to Claim 6 or 7, **characterized in that** the pressure sensor (125) comprises a bypass (126).

9. Metering system according to Claim 8, **characterized in that** the pressure sensor (125) has a first flow cross section (Q1) and the bypass has a second flow cross section (Q2), wherein the flow cross section (Q2) of the bypass is larger than the flow cross section (Q1) of the pressure sensor.

10. Metering system according to one of the preceding claims, **characterized in that** a device (96) for removing samples from the reaction vessel (2, 2') is provided.

11. Method for metering a fluid at a certain first metering rate (DR1) from a storage container (30) into a reaction vessel (2, 2'), having a metering device (87, 87', 54) which is suitable for producing individual drops of the fluid, **characterized in that** a second pressure (p2) upstream of the metering device (87, 87', 54) and a first pressure (p1) downstream of the metering device (87, 87', 54) are measured, and a differential pressure (p2-p1) is formed from the difference between the second pressure (p2) and the first pressure (p1), and at least one control value (SW) for the metering device (87, 87') is determined from the differential pressure (p2-p1) and the determined first metering rate (DR1), wherein the at least one control value (SW) comprises the opening period and/or the frequency of the metering device (87, 87', 54), and a second metering rate (DR2) is measured by metering rate determining means (135, 136) and the at least one control value (SW) is readjusted on the basis of a difference between the first determined metering rate (DR1) and the second measured metering rate (DR2).

12. Method according to Claim 11, **characterized in that** a control device (99) controls the opening period and/or the frequency of the metering device (87, 87') in such a way that the second measured metering rate (DR2) corresponds to the first determined metering rate (DR1).

13. Method according to Claim 11, **characterized in that** the metering rate determining means (135, 136) comprises at least one weighing means (135), wherein the at least one weighing means (135) is arranged below or above one or more storage containers (30) and determines a value of the weight of the fluid in the storage container (30), wherein the change in the value of the weight within a specific measuring interval corresponds to the second measured metering rate (DR2).

14. Method according to Claim 11, **characterized in that** the metering rate determining means (135, 136) comprises at least one flow sensor (136), wherein the flow sensor (136) determines the second measured metering rate (DR2).

15. Method according to Claims 11 to 14, **characterized in that** a metering system according to Claims 1 to 9 is used.

## Revendications

1. Système de dosage (105) destiné à doser au moins un fluide (31, 31') avec un premier taux de dosage (DR1) déterminé, à partir d'au moins un réservoir de stockage (30) dans un ou dans plusieurs récipient(s) de réaction (2, 2'), **caractérisé par** au moins un dispositif de dosage (87, 87', 54), des moyens pour déterminer une première pression (p1) après le dispositif de dosage (87, 87', 54) et des moyens pour déterminer une deuxième pression (p2) avant le dispositif de dosage, un dispositif d'application d'une pression (46), le dispositif étant apte à soumettre le fluide dans le réservoir de stockage (30) à la deuxième pression (p2) et un dispositif de commande (99), sur la base d'une pression différentielle entre la deuxième pression (p2) et la première pression (p1) et le premier taux de dosage (DR1) déterminé, le dispositif de commande (99) étant apte à fixer au moins une valeur de réglage (SW) pour le dispositif de dosage (87, 87', 54) et des moyens de détermination (135, 136) du taux de dosage, les moyens de détermination (135, 136) du taux de dosage étant aptes à mesurer un deuxième taux de dosage (DR2) et sur la base d'une différence entre le premier taux dosage (DR1) déterminé et le deuxième taux de dosage (DR2) mesuré, le dispositif de commande (99) étant apte à réajuster l'au moins une valeur de réglage (SW).

2. Système de dosage selon la revendication 1, **caractérisé en ce que** les moyens de détermination (135, 136) du taux de dosage, de préférence des moyens de pesage (135), comprennent de manière particulièrement préférée une balance de précision.

3. Système de dosage selon la revendication 2, **caractérisé en ce que** l'au moins un moyen de pesage (135) est apte à mesurer le deuxième taux de dosage (DR2), **en ce qu'**une différence de masse du fluide dans le réservoir de stockage (30, 30') est déterminée dans un intervalle de mesure défini.

4. Système de dosage selon l'une quelconque des revendications précédentes, **caractérisé en ce que** le moyen de détermination (135, 136) du taux de dosage comprend un capteur de débit (136), le capteur de débit (136) étant placé dans un conduit de transfert (32, 32') entre l'au moins un réservoir de stockage (30, 30') et le dispositif de dosage (87, 87') et étant apte à déterminer le deuxième taux de dosage (DR2) mesuré.

5. Système de dosage selon la revendication 4, **caractérisé en ce que** le capteur de débit est un capteur de débit à usage unique.

6. Système de dosage selon l'une quelconque des revendications précédentes, **caractérisé en ce que** le moyen de détermination d'une deuxième pression (p2) comprend un capteur de pression (125).

7. Système de dosage selon la revendication 6, **caractérisé en ce que** le capteur de pression (125) est intégré dans le dispositif de dosage (87, 87', 54).

8. Système de dosage selon la revendication 6 ou la revendication 7, **caractérisé en ce que** le capteur de pression (125) comprend une dérivation (126).

9. Système de dosage selon la revendication 8, **caractérisé en ce que** le capteur de pression (125) comporte une première section transversale (Q1) d'écoulement et la dérivation comporte une deuxième section transversale (Q2) d'écoulement, la section transversale (Q2) d'écoulement de la dérivation étant supérieure à la section transversale (Q1) d'écoulement du capteur de pression.

10. Système de dosage selon l'une quelconque des revendications précédentes, **caractérisé en ce qu'**il est prévu un dispositif (96) pour le prélèvement d'échantillons dans le récipient de réaction (2, 2').

11. Procédé destiné à doser un fluide avec un premier taux de dosage (DR1) déterminé à partir d'un réservoir de stockage (30) dans un récipient de réaction (2, 2') avec un dispositif de dosage (87, 87', 54) qui est apte à créer des gouttes isolées du fluide, **caractérisé en ce qu'**une deuxième pression (p2) est détectée avant le dispositif de dosage (87, 87', 54) et une première pression (p1) est déterminée après le dispositif de dosage (87, 87', 54) et à partir de la différence entre la deuxième pression (p2) et la première pression (p1), il est formé une pression différentielle (p2-p1) et à partir de la pression différentielle (p2-p1) et du premier taux de dosage (DR1) déterminé, il est déterminé au moins une valeur de réglage (SW) pour le dispositif de dosage (87, 87'), l'au moins une valeur de réglage (SW) comprenant la durée d'ouverture et/ou la fréquence du dispositif de dosage (87, 87', 54) et un deuxième taux de dosage (DR2) étant mesuré par des moyens de détermination (135, 136) d'un taux de dosage ; et l'au moins une valeur de réglage (SW) étant réajustée sur la base d'une différence entre le premier taux de dosage (DR1) déterminé et le deuxième taux de dosage (DR2) mesuré.

12. Procédé selon la revendication 11, **caractérisé en ce qu'**un dispositif de commande (99) commande la durée d'ouverture et/ou la fréquence du dispositif de dosage (87, 87') de telle sorte que le deuxième taux de dosage (DR2) mesuré corresponde au premier taux de dosage (DR1) déterminé.

13. Procédé selon la revendication 11, **caractérisé en ce que** les moyens de détermination (135, 136) du taux de dosage comprennent au moins un moyen de pesage (135), l'au moins un moyen de pesage (135) étant placé sous ou sur un ou plusieurs des réservoirs de stockage (30) et déterminant une valeur pondérale du fluide dans le réservoir de stockage (30), la variation de la valeur pondérale dans un intervalle de mesure déterminé correspondant au deuxième taux de dosage (DR2) mesuré.

14. Procédé selon la revendication 11, **caractérisé en ce que** les moyens de détermination (135, 136) du taux de dosage comprennent au moins un capteur de débit (136), le capteur de débit (136) déterminant le deuxième taux de dosage (DR2) mesuré.

15. Procédé selon la revendication 11 à la revendication 14, **caractérisé en ce qu'**on utilise un système de dosage selon la revendication 1 à la revendication 9.
